Europäisches Patentamt

**European Patent Office**

Office européen des brevets

(11) Publication number: **0 153 123 B1**

## EUROPEAN PATENT SPECIFICATION

(45) Date of publication of patent specification: **10.04.91** (51) Int. Cl.⁵: **G01C 19/64**

(21) Application number: **85300903.3**

(22) Date of filing: **11.02.85**

The file contains technical information submitted after the application was filed and not included in this specification

(54) **Gated fiber optic rotation sensor with extended dynamic range.**

(30) Priority: **17.02.84 US 581303**
**17.02.84 US 581304**

(43) Date of publication of application:
**28.08.85 Bulletin 85/35**

(45) Publication of the grant of the patent:
**10.04.91 Bulletin 91/15**

(84) Designated Contracting States:
**AT BE CH DE FR GB IT LI LU NL SE**

(56) References cited:
**WO-A-82/03456**    **WO-A-83/00552**
**WO-A-83/04305**    **DE-A- 3 104 786**
**GB-A- 1 141 727**    **US-A- 3 512 890**

(73) Proprietor: **THE BOARD OF TRUSTEES OF THE LELAND STANFORD JUNIOR UNIVERSITY**
**Encina 105 Stanford University**
**Stanford California 94305(US)**

(72) Inventor: **Shaw, Herbert J.**
**719 Alvarado Row**
**Stanford California 94305(US)**
Inventor: **Kim, Byoung Yoon**
**48-C Escondido Village**
**Stanford California 94305(US)**

(74) Representative: **Rushton, Ronald et al**
**SOMMERVILLE & RUSHTON 11 Holywell Hill**
**St. Albans Hertfordshire AL1 1EZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

The present invention relates to rotation sensors, such as gyroscopes, and particularly to a fiber optic rotation sensor which has an extended dynamic range.

Fiber optic rotation sensors typically comprise a loop of fiber optic material to which light waves are coupled for propagation around the loop in opposite directions. Rotation of the loop creates a relative phase difference between counter-propagating waves, in accordance with the well known "Sagnac effect", with the amount of phase difference corresponding to the velocity of rotation. The counter-propagating waves, when recombined, interfere constructively or destructively to produce an optical output signal which varies in intensity in accordance with the rotation rate of the loop. Rotation sensing is commonly accomplished by detection of this optical output signal.

Various techniques have been devised to increase the sensitivity of fiber optic rotation sensors to small rotation velocities. However, most of these techniques have not been usable for detecting very large rotation velocities because the output functions tend to repeat themselves at various velocities of rotation. As a result, the output signal cannot be utilized to determine which of those possible rotation velocities having the same output signal waveform is responsible for the particular output signal waveform observed.

This is the case of the gyroscopes disclosed in the following references.

In the patent application WO-83/04305, there is disclosed a rotation-sensing interferometer in which errors caused by the Kerr effect are reduced or eliminated by intensity modulating each of the counter-propagating waves in accordance with a specific waveform. When the counterpropagating waves are modulated according to such a waveform, the non-reciprocal, intensity weighted average of the Kerr-induced phase accumulated by each wave during the traverse of the interferometer loop will be equal, so that the Kerr-induced errors are zero, thus providing Kerr effect compensation. However, this patent application does not teach how to obtain an extended dynamic range for monitoring environmental conditions such as rotation, as it is mainly concerned with the reduction of the errors induced by the Kerr effect and not with the compensation of the Sagnac effect per se .

In the German reference DE-A-3 104 786, there is disclosed an apparatus and a method for measuring rotations. The apparatus disclosed therein uses a sawtooth signal which regulates at least one phase modulator. However, in this reference, the effects experienced during the fly-back of the sawtooth waveform are reduced by selecting the maximum amplitude of the optical phase (sawtooth oscillation) at a precise value of $2\pi$ or at an integral of the same. The apparatus disclosed in this reference can only be operated with minimum influence of the fly-back effect when the amplitude of the sawtooth waveform is maintained at the value of $2\pi$. Other embodiments are disclosed in the above-mentioned German patent application. In all of them, the Sagnac phase shift is compensated by phase modulating with a variable frequency which is dependent upon the Sagnac phase shift, at a constant amplitude, preferably $2\pi$. In this apparatus, rotation cannot be measured accurately over a very broad range of rotation velocities.

Background information on gyroscopes can be found in the following references. In the patent application GB-A-1 141 727, for example, there is disclosed a rotation rate sensor either in the form of a ring laser gyroscope or a vibratory gyroscope, comprising modulating, filtering, detecting and computing means for the output signal of the sensor. This application is concerned with the reduction of the random drift effect in the output signal of a rotation rate sensor. Modulation of the counterpropagating waves is only performed once. There is no mention of a second modulation at a frequency different from the frequency of the first modulation.

An optical gyroscope is also disclosed in the patent US-A-3 512 890 but such a gyroscope is not made of fiber optics and cannot accurately and reliably sense rotation rates over a very broad range of rotation velocities.

Fiber optic rotation sensors are also described in WO 82/03456 and WO 83/00552. The gyroscopes disclosed therein employ the Sagnac effect and comprise all fiber optic components positioned along a continuous, uninterrupted strand of fiber optic material. They typically include a detection system utilizing a modulator for phase modulating light waves which counterpropagate through a loop of optical fiber formed in the fiber optic strand. In WO 82/03456, the modulator is operated at a specific frequency to eliminate amplitude modulation in the detected output signal. In WO 83/00552, the rotation sensor utilizes unpolarized light to provide reciprocal operation. In none of those gyroscopes is there mention of a second modulation at a frequency different from the frequency of the first modulation.

. Thus, it would be a great improvement in the art to provide a phase modulation technique wherein rotation could be accurately and reliably sensed over a very broad range of rotation velocities. Such a technique and means for its accomplishment are described herein.

## Summary of the Invention

The present invention discloses a fiber optic apparatus for sensing and measuring rotation utilizing an optical loop, comprising a light source providing counterpropagating lightwaves in the loop, a detector responsive to the counterpropagating lightwaves, the phase difference between the counterpropagating lightwaves being shifted in acordance with rotation. The lightwaves are first phase modulated at a first frequency $f_b$ and finally combined to form an output signal. The apparatus of the present invention as claimed in Claim 1 is characterized by a gating circuit for blanking at least a component of the output signal at selected times to provide a gated signal, a phase difference modulator for biasing the counterpropagating lightwave phase difference at a second, substantially fixed frequency $f_m$, a control device responsive to the output of the detector for adjusting the periodic bias of the phase difference modulator at the second frequency $f_m$, so as to null a component in the gated signal caused by rotation and a circuit for measuring the amount of periodic bias to determine the amplitude of rotation.

Preferably, the gating circuit blanks the component at the second frequency $f_m$. The second frequency $f_m$ is advantageously less than the first frequency $f_b$. The apparatus of the present invention preferably comprises a signal generator for producing a modulation signal at the second frequency $f_m$, the signal generator driving the phase difference modulator through the control device.

In a preferred embodiment of the present invention, the gating circuit comprises a gating device connected to the detector and responsive to the signal generator for blanking out selected portions of the counterpropagating lightwaves and a feedback circuit connecting the gating device to the control device for comparing the output of the gating device with a reference signal at the first frequency $f_b$ and for driving the control device to adjust the amplitude of modulation at the first frequency $f_b$ to cancel the component in the gated signal caused by the rotation. Preferably, the phase difference modulator applies a substantially DC phase bias to the counterpropagating lightwaves. In this embodiment, the apparatus of the present invention advantageously comprises a biasing circuit for applying a phase-ramp modulation to the counterpropagating lightwaves at the second frequency $f_m$. The biasing circuit preferably comprises a signal generator for producing a first modulation signal at the second frequency $f_m$, an electronic circuit responsive to the first modulation signal for modifying the first modulation signal so as to produce a resultant modulation signal, wherein at least a portion of the resultant modulation signal defines a ramp waveform, and an error correction modulator electrically connected to the signal generator for adjusting the amplitude of the resultant modulation signal in response to rotation, the phase modulator applying the resultant modulation signal to the counterpropagating waves so that, during the ramp waveform portion of the resultant modulation signal, the substantially DC component of the phase difference modulation caused by the phase-ramp modulation substantially nulls the phase shift produced in the phase difference by rotation. This preferred embodiment of the present invention may also comprise a gating device electrically connected to the detector and responsive to the signal generator for blanking out selected portions of the phase difference signal and a feedback circuit electrically connected to the gating device for detecting the non-blanked out portion of the phase difference signal, comparing this with a reference signal, and producing a feedback error signal which controls the error correction modulator such that the amplitude of the resultant modulation signal is adjusted to reduce the amplitude of the feedback error signal. As to the electronic circuit, it preferably comprises a frequency multiplier electrically coupled to the signal generator for providing a second modulation signal which is a harmonic of the first modulation signal, an amplitude adjust circuit for adjusting the amplitude of the harmonic to correspond with the amplitude of the first modulation signal, a phase shifter for shifting the phase of the harmonic with respect to the first modulation signal so that at least a portion of the sum of the waveforms of the first and the second modulation signals defines a ramp waveform, and an electrical connection between the signal generator and the phase shifter for combining the first and second modulation signals to form the resultant modulation signal.

According to another aspect of the present invention, there is also disclosed a method of determining rotation utilizing an optical loop having propagating therein counterpropagating lightwaves which are phase modulated at a first frequency $f_b$ and which are combined to form an output signal. This method is characterized by the steps of blanking at least a component of the output signal at selected times to provide a gated signal, biasing the phase of the counterpropagating lightwaves at a second substantially fixed frequency $f_m$, to substantially null a component in the gated signal which is produced by rotation and measuring the amount of bias to determine rotation. The step of biasing the phase of the counterpropagating lightwaves preferably comprises the steps of phase modulating the counterpropagating ligh-

EP 0 153 123 B1

twaves at the second, substantially fixed frequency $f_m$, providing a feedback signal in response to the output signal, the feedback signal comprising a measure of the amount of phase shift produced by rotation in the counterpropagating lightwave phase difference which has not been nulled by the phase modulation and adjusting the amplitude of the phase modulation at the second frequency $f_m$ in response to the feedback signal. The step of measuring the amount of bias advantageously comprises the step of monitoring the amplitude of the phase modulation at the second frequency $f_m$. As to the biasing step, in a preferred embodiment of the present invention, it comprises the step of applying a phase-ramp modulation to the counterpropagating lightwaves during at least a portion of a period corresponding to the second frequency so as to apply a substantially DC phase bias to the counterpropagating lightwave phase difference and to substantially null a component in the gated signal which is produced by the physical parameter.


Brief Description of the Drawings

These and other advantages of the present invention are best understood with reference to the drawings in which:

FIGURE 1 is a schematic drawing of a basic rotation sensor, showing the fiber optic components positioned along a continuous, uninterrupted strand of fiber optic material, and further showing the signal generator photodetector, lock-in amplifier, and display associate with the detection system;

FIGURE 2 is a sectional view of one embodiment of a fiber optic directional coupler for use in the rotation sensor of Figure 1;

FIGURE 3 is a sectional view of one embodiment of a fiber optic polarizer for use in the rotation sensor of Figure 1;

FIGURE 4 is a perspective view of one embodiment of a fiber optic polarization controller for use in the rotation sensor of Figure 1;

FIGURE 5 is a schematic diagram of the rotation sensor of Figure 1 with the polarizer, polarization controllers, and phase modulator removed therefrom;

FIGURE 6 is a graph of the intensity of the optical output signal, as measured by the photodetector, as a function of the rotationally induced Sagnac phase difference, illustrating the effects of birefringence induced phase differences and birefringence induced amplitude fluctuations;

FIGURE 7 is a graph of phase difference as a function of time showing the phase modulation of each of the counter-propagating waves and the phase difference between the counter-propagating waves;

FIGURE 8 is a schematic drawing illustrating the effect of the phase modulation upon the intensity of the optical output signal, as measured by the detector, when the loop is at rest;

FIGURE 9 is a schematic drawing showing the effect of the phase modulation upon the intensity of the optical output signal as measured by the detector when the loop is rotating;

FIGURE 10 is a graph of the amplifier output signal as a function of the rotationally induced Sagnac phase difference, illustrating an operating range for the rotation sensor of Figure 1;

FIGURE 11 is a diagram of one preferred embodiment of a gated closed loop rotation sensor with extended dynamic range;

FIGURE 12 is a diagram of the overall phase shift resulting from the bias phase modulation and the lower frequency phase modulation in conjunction with a constant bias resulting from the Sagnac effect;

FIGURE 13 is a diagram of the overall phase shift for lower frequency phase modulation in conjunction with a constant bias resulting from the Sagnac effect, and the optical output signal which results from gating.

FIGURE 14 is a graph of the scale factor of the rotation sensor illustrated in Figure 11;

FIGURE 15 is a circuit diagram for an error correction modulator;

FIGURE 16 is a diagram of the response of the modulator of Figure 15 to a sample error signal;

FIGURE 17 is a diagram of a preferred error correction modulator;

FIGURE 18 is a schematic diagram of the overall sensor using the error correction modulator of Figure 17;

FIGURE 19 is a diagram of another error correction modulator which could be used in the embodiment of Figure 11;

FIGURE 20 is a diagram of the preferred embodiment of an output circuit for the rotation sensor for converting the amplitude of the lower frequency driving signal to the rotation rate;

FIGURE 21 is a diagram of an output display circuit which could be used in linear regions of the scale factor;

FIGURE 22 is a diagram of another output display circuit which could be used in linear regions of the

4

scale factor; and

FIGURE 23 is a graph illustrating the relative phase difference between the interfering waves which are modulated by a ramp waveform;

FIGURE 24 is a diagram illustrating the relative phase between the interfering waves which are modulated by a saw-tooth waveform, and the phase difference between those interfering waves;

FIGURE 25 is a graphical illustration of one method of forming a saw-tooth wave and further illustrating the relative phase between the interfering waves which are modulated by the saw-tooth waveform, as well as illustrating the phase difference between those interfering waves;

FIGURE 26 is a diagram of the overall phase shift resulting from the bias phase modulation and the lower frequency saw-tooth waveform phase modulation in conjunction with a constant bias resulting from the Sagnac effect, and the output signal which results from gating;

FIGURE 27 is a diagram of one preferred embodiment of a gated, closed loop rotation sensor having extended dynamic range and a substantially linearized scale factor;

FIGURE 28 is a graph of the scale factor of the sensor illustrated in Figure 27; and

FIGURE 29 is a diagram of another preferred embodiment of a gated, closed loop rotation sensor having extended dynamic range and a substantially linear transfer function.


Detailed Description of the Preferred Embodiment

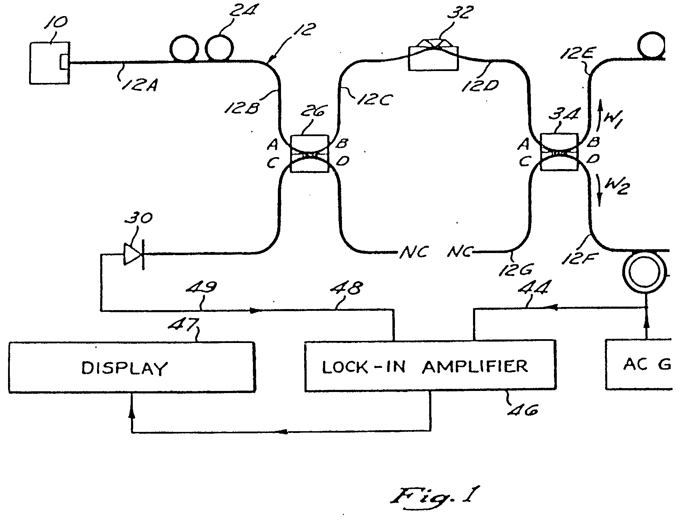

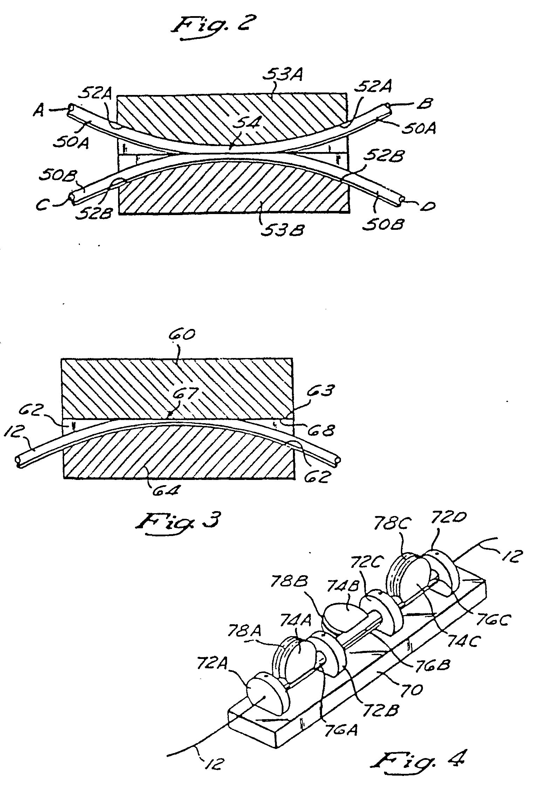

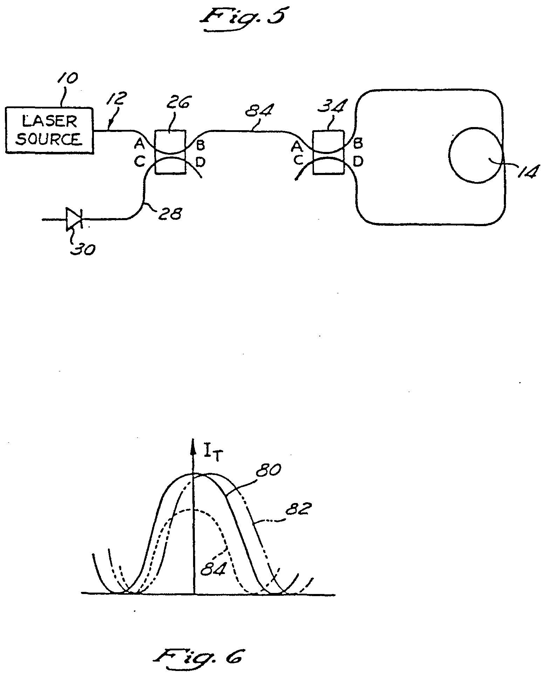

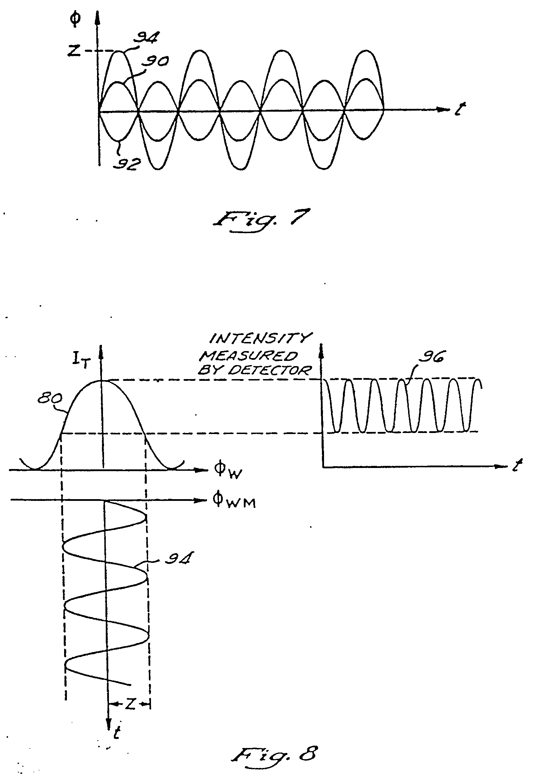

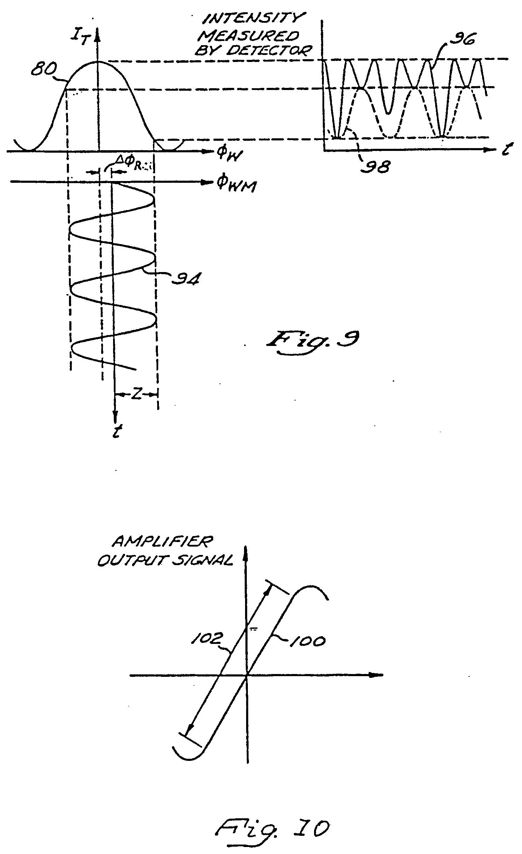

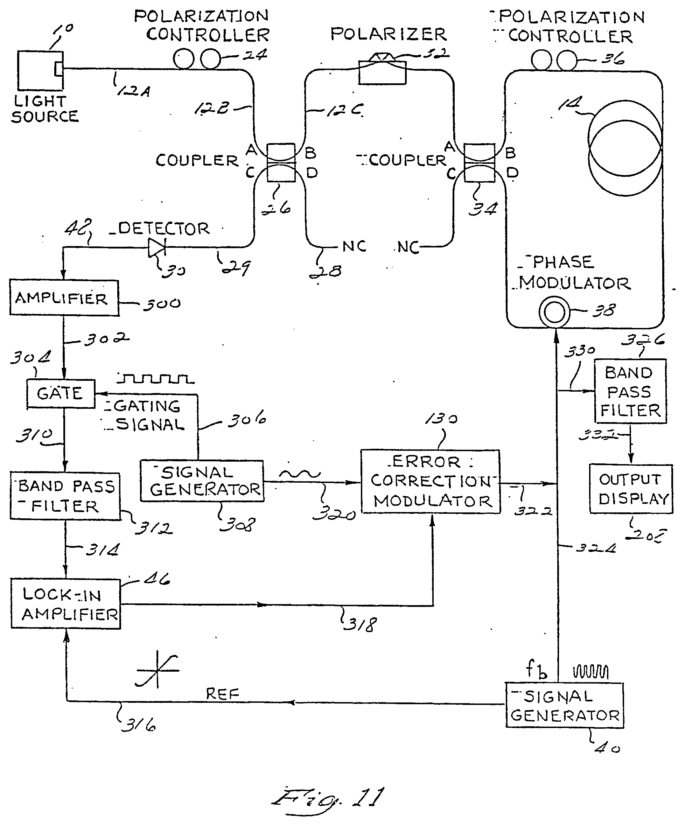

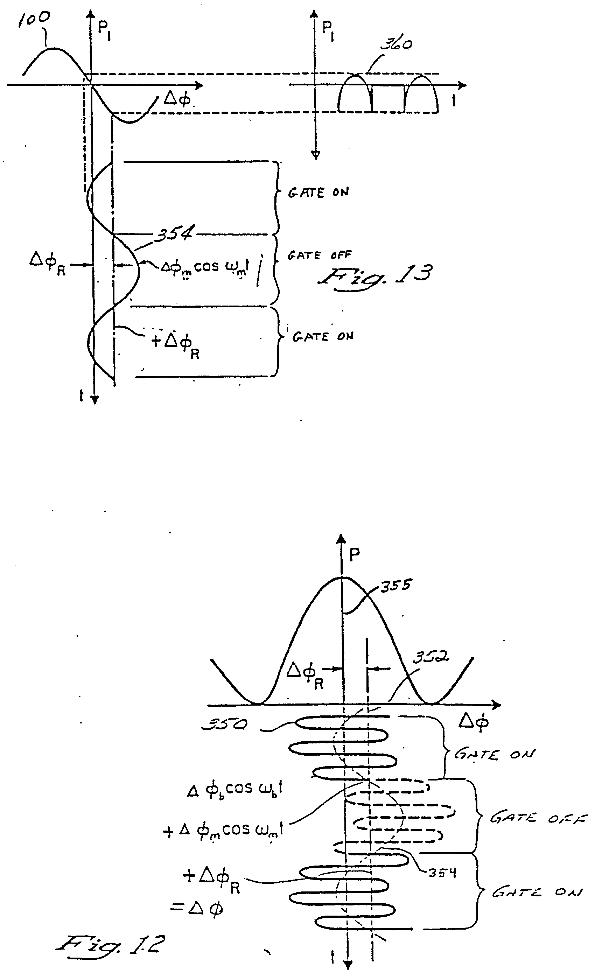

Before proceeding with a discussion of the preferred embodiment of the invention, a discussion of the basic rotation sensor used in the invention is necessary for a fuller understanding of the improvement. Figure 1 shows a rotation sensor having a basic structure which is of the type used in the present invention. It includes a light source 10 for introducing light into a continuous length or strand of optical fiber 12, a portion of which is wound into a sensing loop 14. As used herein, the reference numeral 12 designates generally the entire continuous strand of optical fiber, while the numeral 12 with letter suffixes (A, B, C, etc.) designates portions of the optical fiber 12.

In the embodiment shown, the light source 10 comprises a galium arsenide (GaAs) laser which produces light having a wave length on the order of 0.82 microns. By way of specific example, the light source 10 may comprise a model GO-DIP laser diode, commercially available from General Optronics Corp., 3005 Hadley Road, South Plainfield, New Jersey. The fiber optic strands such as the strand 12 are preferably single mode fibers having, for example, an outer diameter of 80 microns and a core diameter of 4 microns. The loop 14 comprises a plurality of turns of the fiber 12 wrapped about a spool or other suitable support (not shown). By way of specific example, the loop 14 may have approximately 1000 turns of fiber wound on a form having a diameter of 14 centimeters.

Preferably, the loop 14 is wound symmetrically, starting from the center, so that symmetrical points in the loop 14 are in proximity. It is believed that this reduces the environmental sensitivity of the rotation sensor, since such symmetry causes time varying temperature and pressure gradients to have a similar effect on both of the counter-propagating waves.

Light from the source 10 is optically coupled to one end of the fiber 12 by butting the fiber 12 against the light source 10. Various components for guiding and processing the light are positioned or formed at various locations along the continuous strand 12. For the purpose of describing the relative locations of these components, the continuous fiber 12 will be described as being divided into seven portions, labeled 12A through 12G, respectively, with the portion 12A through 12E being on the aside of the loop 14 that is coupled to the source 10, and the portions 12F and 12G being on the opposite side of the loop 14.

Adjacent to the light source 10, between the fiber portions 12A and 12B, is a polarization controller 24. A type of polarization controller suitable for use as the controller 24 is described in detail in U.S. Patent No. 4,389,090 issued June 21, 1983 entitled "Fiber-Optic Polarization Controller" assigned to the assignee of the present invention. A brief description of the polarization controllers 24 will be provided subsequently. However, it should be presently understood that this controller 24 permits adjustment of both the state and direction of polarization of the applied light.

The fiber 12 then passes through ports labeled A and B of a directional coupler 26, located between the fiber portions 12B and 12C. The coupler 26 couples optical power to a second strand of optical fiber which passes through the ports labeled C and D of the coupler 26, the port C being on the same side of the coupler as the port A, and the port D being on the same side of the coupler as the port B. The end of the fiber 28 extending from the port D terminates non-reflectively at the point labeled "NC" (for "not connected") while the end of the fiber 29 extending from the port C is optically coupled to a photodetector 30. By way of specific example, the photodetector 30 may comprise a standard, reverse biased, silicon, PIN-type, photo diode. The coupler 26 is described in detail in EUROPEAN Patent Application No. 82 304705 entitled "Fiber-Optic Directional Coupler" and in EUROPEAN Patent Application No. 81 102667, entitled "Fiber-Optic Directional Coupler" both of said patents being assigned to the assignee of the present invention.

The fiber portion 12C extending from port B of the coupler 26 passes through a polarizer 32, located between the fiber portions 12C and 12D. A monomode optical fiber has two polarization modes of travel for any light wave. The polarizer 32 permits passage of light in one of the polarization modes of the fiber 12, while preventing passage of light in the other polarization mode. Preferably, the polarization controller 24 mentioned above is used to adjust the polarization of the applied light so that such polarization is substantially the same as the polarization mode passed by the polarizer 32. This reduces the loss of optical power as the applied light propagates through the polarizer. A preferred type of polarizer for use in the present invention is described in detail in U.S. Patent No. 4,386,822 issued June 7, 1983 entitled "Polarizer and Method" assigned to the assignee of the present invention.

After passing through the polarizer 32, the fiber 12 passes through ports labeled A and B of a directional coupler 34, located between the fiber portions 12D and 12E. This coupler 34 is preferably of the same type as described above in reference to the coupler 26. The fiber 12 is then wound into the loop 14, with a polarization controller 36 located between the loop 14 and fiber portion 12E. This polarization controller 36 may be of the type discussed in reference to the controller 24, and is utilized to adjust the polarization of the light waves counter-propagating through the loop 14 so that the optical output signal, formed by interference of these counter-propagating waves, has a polarization which will be efficiently passed by the polarizer 32 with minimal optical power loss. Thus, by utilizing both the polarization controllers 24 and 36, the polarization of the light propagating through the fiber 12 may be adjusted for maximum optical power output.

A phase modulator 38 driven by an AC signal generator 40 is mounted in the fiber segment 12F between the loop 14 and the second directional coupler 34. This modulator 38 comprises a PZT cylinder, around which the fiber 12 is wrapped. The fiber 12 is bonded to the cylinder so that when it expands radially in response to the modulating signal from the generator 40, it stretches the fiber 12.

An alternative type of modulator (not shown), suitable for use with the present invention, comprises a PZT cylinder which longitudinally stretches four segments of the fiber 12 bonded to short lengths of capillary tubing at the ends of the cylinder. Those skilled in the art will recognize that this alternative type of modulator may impart a lesser degree of polarization modulation to the propagating optical signal than the modulator 38; however, it will be seen subsequently that the modulator 38 may be operated at a frequency which eliminates the undesirable effects of polarization modulation. Thus, either type of modulator is suitable for use in the present invention.

The fiber 12 then passes through ports labeled C and D of the coupler 34, with the fiber portion 12F extending from the port D and the fiber portion 12G extending from the port C. Fiber portion 12G terminates non-reflectively at a point labeled "NC" (for "not connected").

The output signal from the AC generator 40 is supplied on a line 44 to a lock-in amplifier 46 as a reference signal, which lock-in amplifier 46 also is connected to receive the output of the photodetector 30 by a line 48. This signal on the line 44 to the amplifier 46 provides a reference signal for enabling the amplifier 46 to synchronously detect the detector output signal at the modulation frequency, i.e., the first harmonic component of the optical output signal, of the modulator 38 while blocking all other harmonics of this frequency.

Lock-in amplifiers are well known in the art and are commercially available.

It will be seen below that the magnitude of the first harmonic component of the detector output signal is proportional through a certain limited operating range to the rotation rate of the loop 14. The amplifier 46 outputs a signal which is proportional to this first harmonic component, and thus provides a direct indication of the rotation rate, which may be visually displayed on a display panel 47. However, the scheme of detection shown in Figure 1 can only be used for relatively small rotation rates as will be seen in connection with the discussion of Figure 9.

### The Couplers 26 and 34

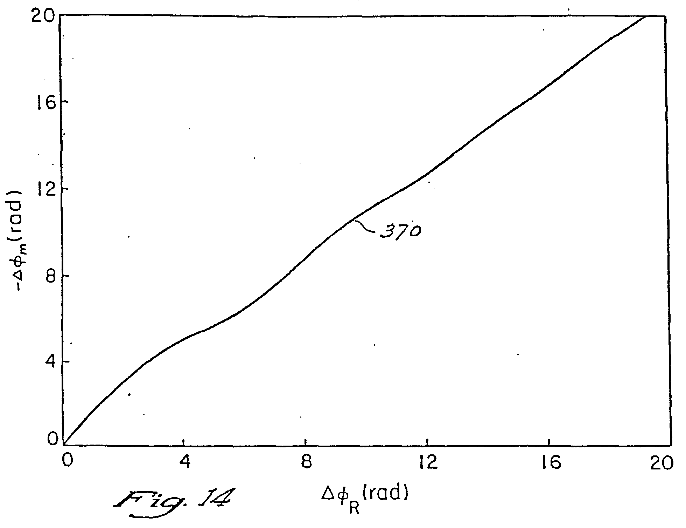

A preferred fiber optic directional coupler for use as the couplers 26 and 34 in the rotation sensor or gyroscope of the present invention is illustrated in Figure 2. The coupler comprises two optical fiber strands labeled 50A, 50B in Figure 2, of a single mode fiber optic material having a portion of the cladding removed from one side thereof. The two strands 50A and 50B are mounted in respective arcuate slots 52A and 52B, formed in respective blocks 53A and 53B. The strands 50A and 50B are positioned with the portions of the strands where the cladding has been removed in close spaced relationship, to form a region of interaction 54 in which the light is transferred between the core portions of the strands. The amount of material removed is such that the core portion of each strand 50A and 50B is within the evanescent field of the other. The center-to-center spacing between the strands at the center of the coupler is typically less than about 2-3 core diameters.

It is important to note that the light transferred between the strands at the region of interaction 54 is directional. That is, substantially all of the light applied to input port A is delivered to the output ports B and D, without contra-directional coupling to port C. Likewise, substantially all of the light applied to input port C is delivered to the output ports B and D. Further, this directivity is symmetrical. Thus, light supplied to either input port B or input port D is delivered to the output ports A and C. Moreover, the coupler is essentially non-discriminatory with respect to polarizations, and thus preserves the polarization of the coupled light. Thus, for example, if a light beam having a vertical polarization is input to port A, the light coupled from port A to port D, as well as the light passing straight through from port A to port B, will remain vertically polarized.

From the foregoing, it can be seen that the coupler may function as a beam-splitter to divide the applied light into two counter-propagating waves W1, W2 (Figure 1). Further, the coupler may additionally function to recombine the counter-propagating waves after they have traversed the loop 14 (Figure 1).

In the embodiment shown, each of the couplers 26, 34 has a coupling efficiency of fifty percent, as this choice of coupling efficiency provides maximum optical power at the photodetector 30 (Figure 1). As used herein, the term "coupling efficiency" is defined as the power ratio of the coupled power to the total output power, expressed as a percent. For example, referring to Figure 2, if light is applied to port A, the coupling efficiency would be equal to the ratio of the power at port D to the sum of the power output at ports B and D. Further, a coupling efficiency of 50% for the coupler 34 insures that the counter-propagating waves W1, W2 are equal magnitude.

### The Polarizer 32

A preferred polarizer for use in the rotation sensor of Figure 1 is illustrated in Figure 3. This polarizer includes a birefringent crystal 60, positioned within the evanescent field of light transmitted by the fiber 12. The fiber 12 is mounted in a slot 62 which opens to the upper face 63 of a generally rectangular quartz block 64. The slot 62 has an arcuately curved bottom wall, and the fiber is mounted in the slot 62 so that it follows the contour of this bottom wall. The upper surface 63 of the block 64 is lapped to remove a portion of the cladding from the fiber 12 in a region 67. The crystal 60 is mounted on the block 64, with the lower surface 68 of the crystal facing the upper surface 63 of the block 64, to position the crystal 60 within the evanescent field of the fiber 12.

The relative indices of refraction of the fiber 12 and the birefringent material 60 are selected so that the wave velocity of the desired polarization mode is greater in the birefringent crystal 60 than in the fiber 12, while the wave velocity of an undesired polarization mode is greater in the fiber 12 than in the birefringent crystal 60. The light of the desired polarization mode remains guided by the core portion of the fiber 12, whereas light of the undesired polarization mode is coupled from the fiber 12 to the birefringent crystal 60. Thus, the polarizer 32 permits passage of light in one polarization mode, while preventing passage of light in the other polarization mode. As previously indicated, the polarization controllers 24, 36 (Figure 1) may be utilized to adjust the polarizations of the applied light and optical output signal, respectively, so that optical power loss through the polarizer is minimized.

### The Polarization Controllers 24, 36

One type of polarization controller suitable for use in the rotation sensor of Figure 1 is illustrated in Figure 4. The controller includes a base 70 on which a plurality of upright blocks 72A through 72D are mounted. Between adjacent ones of the blocks 72, spools 74A through 74C are tangentially mounted on shafts 76A through 76C, respectively. The shafts 76 are axially aligned with each other, and are rotatably mounted between the blocks 72. The spools 74 are generally cylindrical and are positioned tangentially to the shafts 76.

The strand 12 extends through axial bores in the shafts 76 and is wrapped about each of the spools 74 to form three coils 78A through 78C. The radii of the coil 78 are such that the fiber 12 is stressed to form a birefringent medium in each of the coils 78. The three coils 78A through 78C may be rotated independently of each other about the axis of the shafts 74A through 74C respectively to adjust the birefringence of the fiber 12 and, thus, to control the polarization of the light passing through the fiber 12.

The diameter and number of turns in the coils 78 are such that the outer coils 78A and C provide a spatial delay of one-quarter wave length, while the central coil 78D provides a spatial delay of one-half wave length. The quarter wave length coils 78A and C control the elipticity of the polarization, and the half wave length coil 78 controls the direction of polarization. This provides a full range of adjustment of the polarization of the light propagating through the fiber 12.

It will be understood, however, that the polarization controller may be modified to provide only the two quarter wave coils 78A and C, since the direction of polarization (otherwise provided by the central coil 78B) may be controlled indirectly through proper adjustment of the elipticity of polarization by means of the two quarter wave coils 78A and C. Accordingly, the polarization controllers 24 and 36 are shown in Figure 1 as including only the two quarter wave coils 78A and C. Since this configuration reduces the overall size of the controllers 24-36, it may be advantageous for certain applications of the present invention involving space limitations.

Thus, the polarization controllers 24 and 36 provide means for establishing, maintaining and controlling the polarization of both the applied light and the counter-propagating waves.

Operation Without Phase Modulation Or Polarization Control

In order to fully understand the function and importance of the polarizer 32 (Figure 1) and phase modulator 38, the operation of the rotation sensor will first be described as if these components had been removed from the system. Accordingly Figure 5 shows the rotation sensor of Figure 1 in schematic block diagram form, with the modulator 38, polarizer 32, and associated components removed therefrom.

Light is coupled from the laser source 10 to the fiber 12 for propagation therein. The light enters port A of the coupler 26, where a portion of the light is lost through port D. The remaining portion of the light propagates from port B to port A of the coupler 34, where it is split into two counter-propagating waves W1, W2 of equal amplitude. The wave W1 propagates from the port B in a clockwise direction about the loop 14, while the wave W2 propagates from port D in a counter-clockwise direction around the loop 14.

After the waves W1, W2 have traversed the loop 14, they are recombined by the coupler 34 to form an optical output signal, which propagates from port A of the coupler 34 to port B of the coupler 26. A portion of the optical output signal is coupled from port B to port C of the coupler 26 for propagation along the fiber 29 to the photodetector 30. This photodetector 30 outputs an electrical signal which is proportional to the intensity of the light impressed thereon by the optical output signal.

The intensity of the optical output signal will vary in accordance with the amount and type, i.e., constructive or destructive, of interference between the waves W1, W2 when they are recombined or interfered at the coupler 34. Ignoring, for the moment, the effects of fiber birefringence, the waves W1, W2 travel the same optical path around the loop 14. Thus, assuming the loop 14 is at rest, when the waves W1, W2 are recombined at the coupler 34, they will interfere constructively, with no phase difference therebetween, and the intensity of the optical output signal will be at a maximum. However, when the loop 14 is rotated, the counter-propagating waves W1, W2, will be shifted in phase in accordance with the Sagnac effect, so that when they are superposed at the coupler 34, they destructively interfere to reduce the intensity of the optical output signal. Such Sagnac phase difference between the waves W1, W2, caused by rotation of the loop 14, is defined by the following relationship:

$$\Delta\phi_R = \frac{8\,\pi NA}{\lambda c}\,\Omega \qquad\qquad (1)$$

where:

A is the area bounded by the loop 14 of optical fiber;

N is the number of turns of the optical fiber about the area A;

$\Omega$ is the angular velocity of the loop about an axis which is perpendicular to the plane of the loop; and

$\lambda$ and c are the free space values of the wave length and velocity, respectively, of the light applied to the loop.

The intensity of the optical output signal ($I_T$) is a function of the Sagnac phase difference ($\Delta\phi_R$) between

the waves W1, W2, and is defined by the following equation:

$$I_T = I_1 + I_2 + 2 \sqrt{I_1 I_2} \cos(\Delta\phi_R) \qquad (2)$$

where $I_1$ and $I_2$ are the individual intensities of the waves $W_1$, $W_2$, respectively.

From equations (1) and (2) it may be seen that the intensity of optical output signal is a function of the rotation rate ($\Omega$). Thus, an indication of such rotation rate may be obtained by measuring the intensity of the optical output signal, utilizing the detector 30.

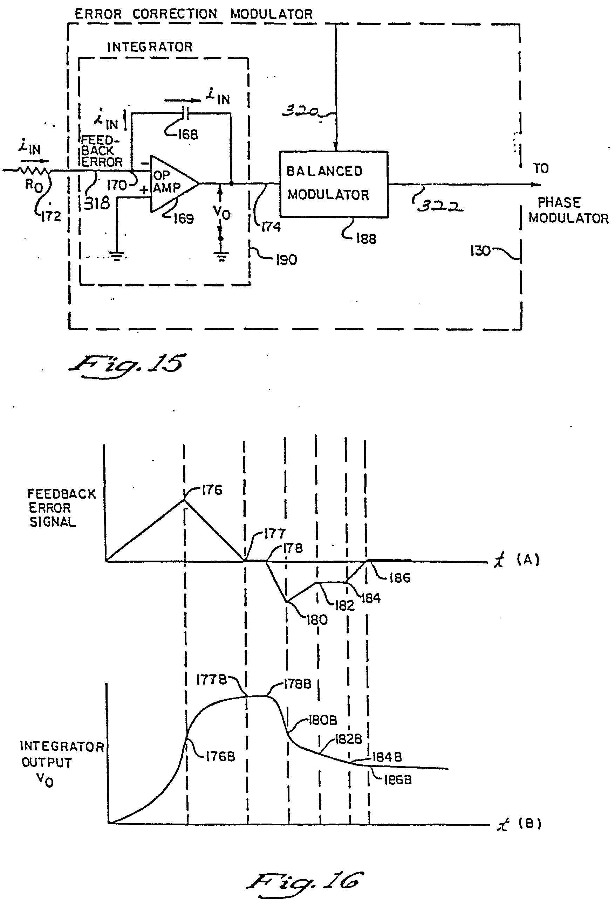

Figure 6 shows a curve 80, which illustrates this relationship between the intensity of the optical output signal ($I_T$) and the Sagnac phase difference ($\Delta\phi_R$) between the counter-propagating waves W1, W2. The curve 80 has the shape of a cosine curve, and the intensity of the optical output signal is at a maximum when the Sagnac phase difference is zero. Where the phase difference between the counter-propagating waves W1, W2 is caused entirely by rotation of the loop 14, the curve 80 will vary symmetrically about the vertical axis. However, with polarized light an additional, non-reciprocal, phase difference between the counterpropagating waves W1, W2 may be caused by the residual birefringence of the optical fiber 12. This additional non-reciprocal phase difference will not occur if completely unpolarized light is used.

Birefringence induced phase differences occur because light traveling in each of the two polarization modes of the single mode fiber 12 travels at a different velocity. Birefringence will cause coupling of part of the light traveling in one polarization mode into the other mode. This creates a non-rotationally induced phase difference between the waves W1, W2, which causes the waves W1, W2 to interfere in a manner that distorts or shifts the curve 80 of Figure 6. Such a shift is illustrated by the curve 82, shown in phantom lines in Figure 6.

Such birefringence induced, non-reciprocal phase difference is indistinguishable from a rotationally induced Sagnac phase difference, and is dependent on environmental factors which vary fiber birefringence, such as temperature and pressure. Thus, fiber birefringence is the cause of a major source of error in fiber optic rotation sensors.

## Operation With the Polarizer 32

The problem of non-reciprocal operation due to fiber birefringence is solved in the rotation sensor of the present invention by means of the polarizer 32 (Figure 1) which, as discussed above, permits utilization of only a single polarization mode. When the polarizer 32 is introduced into the system at the point designated by the reference numeral 84 in Figure 5, light passing through the polarizer 32 propagates into the loop 14 in one selected polarization mode. Further, when the counter-propagating waves are recombined to form the optical output signal, any light that is not of the same polarization as the light applied to the loop is prevented from reaching the photodetector 30, since the optical output signal passes through the polarizer 32. Thus, the optical output signal, as it travels from port A of coupler 34 to port B of coupler 26, will have precisely the same polarization as the light applied to the loop.

Therefore, by passing the input light and optical output signal through the same polarizer 32, only a single optical path is utilized, thereby eliminating the problem of birefringence induced phase difference caused by the different velocities of propagation in the two possible polarization modes. That is, by filtering out all light which is transferred from the selected mode to the unselected mode by the birefringence in the fiber, it is possible to eliminate all light waves in the unselected mode which might gain or lose phase relative to the selected mode because of the different velocity of propagation. Further, it should be noted that the polarization controllers 24, 36 (Figure 1) may be used to adjust the polarization of the applied light, and optical output signal, respectively, to reduce optical power loss at the polarizer 32, and thus, maximize the signal intensity at the detector 30.

## Operation With the Phase Modulator 38

Referring again to Figure 6, it will be seen that, because the curve 80 is a cosine function, the intensity of the optical output signal is nonlinear for small Sagnac phase differences ($\Delta\phi_R$) between the waves W1, W2. Further, the optical output signal intensity is relatively insensitive to changes in phase difference, for small values of $\Delta\phi_R$ Such nonlinearity and insensitivity makes it difficult to transform the optical intensity ($I_T$)

measured by detector 30 into a signal indicative of the rate of rotation of the loop 14 (via equation 1).

Further, although birefringence induced phase differences between the waves W1, W2 are eliminated, as discussed above by use of the polarizer 32, nevertheless cross coupling between polarization modes caused by fiber birefringence occurs. This cross coupling reduces the optical intensity of the optical output signal since the cross coupled light is prevented from reaching the photodetector 30 on the polarizer 32. Thus, changes in fiber birefringence cause the amplitude of the curve 80 of Figure 6 to vary, for example, as illustrated by the curve 84. It will be understood that curves 80, 82, 84 of Figure 6 are not drawn to scale.

The foregoing problems are solved by means of a synchronous detection system utilizing the phase modulator 38, signal generator 40 and lock-in amplifier 46 shown in Figure 1.

Referring to Figure 7, the phase modulator 38 modulates the phase of each of the propagating waves W1, W2 at the frequency of the signal generator 40. However, as may be seen from Figure 1, the phase modulator 38 is located at one end of the loop 14. Thus, the modulation of the wave W1 is not necessarily in phase with the modulation of the wave W2. Indeed, it is preferable for proper operation of this synchronous detection system that the modulation of the waves W1, W2 be 180° out of phase. Referring to Figure 7, it is preferable that the modulation of the wave W1, represented by the sinusoidal curve 90, be 180° out of phase with the modulation of the wave W2, represented by the curve 92. Use of a modulation frequency which provides such 180° phase difference between the modulation of the wave W1 relative to that of W2 is particularly advantageous in that it eliminates modulator induced amplitude modulation in the optical output signal measured by the detector 30. This modulation frequency ($f_b$) may be calculated using the following equation:

$$f_b = \frac{c}{2n_{eq}L} \tag{3}$$

where:

L is the differential fiber length between the coupler 34 and the modulator 38 for the counter-propagating waves W1, W2, i.e., the distance, measured along the fiber, between the modulator 38 and a symmetrical point on the other side of the loop 14;

$n_{eq}$ is the equivalent refractive index for the single mode fibre 12; and

c is the free space velocity of the light applied to the loop 14.

At this modulation frequency ($f_b$) which is called the "proper" frequency or "bias frequency" the phase difference ($\Delta\phi_1$) between the counter-propagating waves W1, W2, stemming from phase modulation of these waves in accordance with the curves 90 and 92, is illustrated by the sinusoidal curve 94 in Figure 7. The curve 94 is obtained by subtracting the curve 92 from the curve 90 to obtain the phase difference between W1 and W2. This modulation of the phase difference between the waves W1, W2 will also modulate the intensity ($I_T$) of the optical output signal in accordance with the curve 80 of Figure 6 just as a Sagnac phase shift would, since such phase modulation $\Delta\phi_1$ is indistinguishable from rotationally induced Sagnac phase differences $\Delta\phi_R$.

The foregoing may be understood more fully through reference to Figures 8 and 9 which graphically illustrate the effect of (a) the phase modulation $\Delta\phi_1$, defined by the curve 94 of Figure 7, and (b) the Sagnac phase difference $\Delta\phi_R$, upon the intensity ($I_T$) of the optical output signal. Before proceeding with a discussion of Figures 8 and 9, it should first be understood that the intensity ($I_T$) of the modulated optical output signal is a function of the total phase difference between the waves W1, W2. Such total phase difference is comprised of both the rotationally induced Sagnac phase difference $\Delta\phi_R$ and the time varying modulation induced phase difference $\Delta\phi_1$. The total phase difference $\Delta\phi$ between the waves W1, W2 may be expressed as follows:

$$\Delta\phi = \Delta\phi_R + \Delta\phi_1 \tag{4}$$

Accordingly, since the effects of the modulation induced phase difference $\Delta\phi_1$, as well as the rotationally induced phase difference $\Delta\phi_R$ will be considered in reference to Figures 8 and 9, the horizontal axis for the curve 80 has been relabeled as $\Delta\phi$ to indicate that the total phase difference is being considered, rather than only the rotationally induced phase difference, as in Figure 6.

Referring now to Figure 8, the effect of the phase modulation $\Delta\phi_1$ (curve 94) upon the intensity $I_T$ of the optical output signal will be discussed. Curve 80 represents the relationship between the intensity of the optical output signal resulting from two interfering coherent waves to the phase difference $\Delta\phi$ between the

waves. When the relative phase angle between them is zero, as illustrated at 93, the resultant intensity of the combined wave is a maximum, as illustrated at 95. When the relative phase between the waves W1 and W2 is non-zero, the combined optical signal will have a lower intensity depending upon the magnitude of the phase difference $\Delta\phi$. The intensity continues to decrease with increasing $\Delta\phi$ until the relative phase difference is either plus or minus $180°$, as illustrated at 97 and 99 respectively. At a phase difference of plus or minus $180°$, the two counter-propagating waves completely destructively interfere, and the resultant intensity is zero as illustrated at 97 and 99.

In Figure 8, it is assumed that the loop 14 is at rest, and thus, the optical signal is not affected by the Sagnac effect. Specifically, it may be seen that the modulation induced phase difference curve 94 causes the optical output signal to vary as illustrated by the curve 96. The curve 96 is obtained by translating the points on the curve 94, representing the instantaneous phase difference $\Delta\phi_1$ between W1 and W2 onto the curve 80 representing the resultant optical intensity for a phase difference of that magnitude. When all the points on the curve 94 are translated onto the curve 80, and the corresponding intensities are plotted, the curve 96 results. The translation of the curve 94 through the curve 80 is symmetrical about the vertical axis of the curve 80, so that the optical intensity measured by the detector 30 varies periodically at a frequency equal to the second harmonic of the modulating frequency, as shown by the curve 96.

Since, as discussed above, the lock-in amplifier 46 is tuned by the reference signal at the modulation frequency $f_m$ from the signal generator 40 (Figure 1), the lock-in amplifier synchronously detects only the detector output signal at the modulation frequency $f_b$, i.e., first harmonic, of the modulator 38. But since the detector output signal is at the second harmonic of the modulation frequency, as shown by the curve 96, the output signal from the amplifier 46 will be zero and the display 47 will indicate a rotation rate of zero.

It should be noted that even if birefringence induced amplitude fluctuations occur in the optical output signal, as discussed in reference to the curve 84 of Figure 6, the curve 96 of Figure 8 will remain at a second harmonic frequency. Thus, such birefringence induced amplitude fluctuations will not affect the amplifier 46 output signal. The detection system thus far described therefore provides a substantially more stable operating point that is insensitive to changes in birefringence.

When the loop 14 is rotated, the counter-propagating waves W1, W2 are shifted in phase, as discussed above, in accordance with the Sagnac effect. The Sagnac phase shift provides a constant phase difference $\Delta\phi_R$ for a constant rotational velocity. This Sagnac phase shift adds to the phase difference $\Delta\phi_1$ created by the modulator 38, so that the entire curve 94 is translated in phase from the position shown in Figure 8, by an amount equal to $\Delta\phi_R$, as shown in Figure 9. This causes the optical output signal to vary nonsymmetrically along the curve 80 between the points 99 and 101. This causes an optical output signal as illustrated by curve 96.

The points on the curve 96 are derived as follows. The combined phase difference, illustrated at 103 on curve 94, translates through the point 101 on the curve 80 to the point 105 on the curve 96. The point 107 on the curve 94 translates through the point 109 on the curve 80 to a point 111 on the curve 96. Likewise, the point 113, translates through the point 99 to the point 115, and the point 117 translates through the point 109 to the point 119. Finally, the point 121 translates through the point 101 to the point 123.

The optical output signal 96 has a first harmonic component as illustrated in phantom lines of the sinusoidal curve 98. The peak amplitude of the first harmonic component 98 need not, however, exactly match the amplitude of the optical output signal at point 115 although it might in some cases.

It will be seen subsequently that the RMS value of this sinusoidal curve 98 is proportional to the sine of the rotationally induced Sagnac phase difference $\Delta\phi_R$. Since the amplifier 46 synchronously detects signals having the fundamental frequency of the modulator 38, the amplifier 46 will output a signal that is proportional to the RMS value of the curve 98. This signal can be used to indicate the rotation rate of the loop.

The drawings of Figure 9 illustrate the intensity waveform of the optical output signal for one direction of rotation (e.g., clockwise) of the loop 14. However, it will be understood that, if the loop 14 is rotated in the opposite direction (e.g., counter-clockwise) at an equal velocity, the intensity waveform 96 of the optical output signal will be exactly the same as illustrated in Figure 9, except that it will be translated so that the curve 98 is shifted $180°$ from the position shown in Figure 9.

The lock-in amplifier 46 detects this $180°$ phase difference for the curve 98, by comparing the phase of the first harmonic 98 with the phase of the reference signal from the signal generator 40, to determine whether the rotation of the loop is clockwise or counter-clockwise. Depending on the direction of rotation, the amplifier 46 outputs either a positive or negative signal to the display 47. However, regardless of the direction of rotation, the magnitude of the signal is the same for equal rates of rotation of the loop 14.

The waveform of the amplifier output signal is shown in Figure 10 as the curve 100. It will be seen that this curve 100 is sinusoidal and varies positively or negatively from the zero rotation rate output voltage, illustrated at 125, depending on whether the rotation of the loop 14 is clockwise or counter-clockwise. Further, the curve 100 has a substantially linear portion 102 which varies symmetrically about the origin and provides a relatively wide operating range for measuring rotation. Moreover, the slope of the curve 100 provides excellent sensitivity through its linear operating range 102 to small Sagnac phase shifts.

Thus, by utilizing the synchronous detection system, the above-described problems of nonlinearity, insensitivity to small Sagnac phase shifts, and birefringence induced amplitude fluctuations are reduced or eliminated for rotation rates of the loop 14 which keep the points 99 and 101 in Figure 9 somewhere on the curve 80 between the points 97 and 95.

A further advantage of the detection system thus far disclosed relates to the fact that state of the art phase modulators, such as the modulator 38, induce amplitude modulation in the optical output signal, either directly or indirectly, through polarization modulation, i.e., the phase modulator also shifts some of the light passing therethrough to the unselected polarization mode. However, it will be recalled from the discussion in reference to Equation (3) that, by operating at a specific or "proper" frequency at which the phase difference between the modulation of the waves W1 and W2 is 180°, the odd harmonic frequency components of this amplitude modulation, that are induced in each of the counter-propagating waves W1, W2 by the modulator 38, cancel each other when the waves are superposed to form the optical output signal. Thus, since the above-described detection system detects only an odd harmonic, i.e., the fundamental frequency, of the optical output signal, the effects of the undesired amplitude modulation are eliminated. Therefore, by operating at the specific frequency defined by Equation (3), and by detecting only an odd harmonic of the optical output signal, the rotation sensor of the present invention may operate independently of modulator induced amplitude and polarization modulation.

A further benefit of operating at the proper frequency is that even harmonics of the phase modulation, induced by the modulator 38 in each of the counter-propagating phase W1, W2, cancel when these waves are superposed to form the optical output signal. Since these even harmonics may, by superposition, produce spurious odd harmonics in the optical signal which might otherwise be detected by the detection system, their elimination improves the accuracy of rotation sensing.

In addition to operating the phase modulator 38 at the frequency defined by Equation (3), it is also preferable to adjust the magnitude of the phase modulation so that the amplitude of the detected first harmonic of the optical output signal intensity is maximized, since this provides improved rotation sensing sensitivity and accuracy. It has been found that the first harmonic of the optical output signal intensity is at the maximum, for a given rotation rate, when the amplitude of the modulator induced phase difference $\Delta\phi_1$ between the waves W1, W2, indicated by the dimension labeled Z in Figures 7, 8, and 9, is 1.84 radians. This may be understood more fully through reference to the following equation for the total intensity ($I_T$) of two superposed waves having individual intensities of $I_1$ and $I_2$, respectively, with a phase difference $\Delta\phi$ therebetween.

$$I_T = I_1 + I_2 + 2\sqrt{I_1 I_2}\cos(\Delta\phi) \qquad (5)$$

where:

$$\Delta\phi = \Delta\phi_R + \Delta\phi_1 \qquad (6)$$

and

$$\Delta\phi_1 = Z\sin(2\pi f_b t). \qquad (7)$$

Thus,

$$\Delta\phi = \Delta\phi_R + Z\sin(2\pi f_b t) \qquad (8)$$

The Fourier expansion of cosine ($\Delta\phi$) is:

$$\cos \Delta\phi = \cos(\Delta\phi_R) \{J_0(z) + 2\sum_{n=1}^{\infty} J_{2n}(z)\cos[2\pi(2nf_b t)]\}$$

$$+ \sin(\Delta\phi_R) \{2\sum_{n=1}^{\infty} J_{2n-1}(z)\sin[2\pi(2n-1)f_b t]\} \qquad (9)$$

where $J_n(z)$ is the $n^{th}$ Bessel function of the variable $z$, and $z$ is the peak amplitude of the modulator induced phase difference between the waves W1, W2.

Therefore, detecting only the first harmonic of $I_T$ yields:

$$I_{T(1)} = 4\sqrt{I_1 I_2} \, J_1(z)\sin(\Delta\phi_R) \, \sin(2\pi f_b t) \qquad (10)$$

Thus, the amplitude of the first harmonic of the optical output signal intensity is dependent upon the value of the first Bessel function $J_1(z)$. Since $J_1(z)$ is a maximum when z equals 1.84 radians, the amplitude of the phase modulation should preferably be selected so that the magnitude (z) of the modulator induced phase difference $\Delta\phi_1$ between the waves W1, W2 is 1.84 radians.

Reducing the Effects of Backscatter

As is well known, present state-of-the-art optical fibers are not optically perfect, but have imperfections such as density fluctuations in the basic material of the fiber. These imperfections cause variations in the refractive index of the fiber which causes scattering of small amounts of light. This phenomena is commonly referred to as Rayleigh scattering. Although such scattering causes some light to be lost from the fiber, the amount of such loss is relatively small, and therefore, is not a major concern.

The principal problem associated with Rayleigh scattering relates not to scattered light which is lost, but rather to light which is reflected so that it propagates through the fiber in a direction opposite to its original direction of propagation. This is commonly referred to as "backscattered" light. Since such backscattered light is coherent with the light comprising the counter-propagating waves W1, W2, it can constructively or destructively interfere with such propagating waves, and thereby cause variation in the intensity of the optical output signal, as measured by the detector 30.

The portion of backscattered light from one wave which will be coherent with the counter-propagating wave is that which is scattered within a coherence length of the center of the loop 14. Thus, by reducing the coherence length of the source, the coherence between the backscattered light and the counter-propagating waves is reduced. The remaining portion of the backscattered light will be incoherent with the counter-propagating wave, and thus, the interference therebetween will vary randomly so that it is averaged. Therefore, this incoherent portion of the backscattered light will be of substantially constant intensity, and consequently, it will not cause significant variations in the intensity of the optical output signal.

Accordingly, in the present invention, the effects of backscatter are reduced by utilizing as the light source 10, a laser having a relatively short coherence length, for example, one meter or less. By way of specific example, the light source 10 may comprise the model GO-DIP laser diode, commercially available from General Optronics Corp., as mentioned above.

An alternative method of prohibiting destructive or constructive interference between the backscattered waves and the propagating waves involves the inclusion of an additional phase modulator in the system at the center of the fiber loop 14. This phase modulator is not synchronized with the modulator 38.

The propagating waves will pass through this additional phase modulator one time only, on their travel around the loop. For backscatter which occurs from a propagating wave before the wave reaches the additional modulator, the backscatter will not be phase modulated by this additional modulator, since neither its source propagating wave nor the backscatter itself has passed through the additional modulator.

On the other hand, for backscatter which occurs from a propagating wave after the wave passes through this additional phase modulator, the backscatter will be effectively twice phase modulated, once when the propagating wave passed through the additional phase modulator, and once when the backscatter passed through the additional modulator.

Thus, if the additional phase modulator introduces a phase shift of $\phi(t)$, the backscattered wave originating at any point except at the center of the loop 14 will have a phase shift of either zero, or $2\phi(t)$, either of which is time varying with respect to the $\phi(t)$ phase shift for the propagating wave. This time varying interference will average out over time, effectively eliminating the effects of the backscatter.

In yet another alternative method of prohibiting destructive or constructive interference from backscatter, the additional phase modulator, not synchronized with the modulator 38, may be introduced at the output of the light source 10.

In this case, backscatter occurring at any point other than the center of the loop 14 will have a different optical path length from the light source 10 to the detector 30 than does the propagating wave from which the backscatter originated.

Thus, the propagating wave will traverse the loop 14 one time, while the backscattered wave and the propagating wave from which it originated will have traversed a portion of the loop 14 twice. If this portion is not one-half of the loop, the path lengths differ.

Because the path lengths differ, a propagating wave which reaches the detector 30 will have been generated at the source 10 at a different time than a backscattered wave which reaches the detector 30 simultaneously.

The phase shift introduced by the additional phase modulator at the source 10 introduced a phase shift $\phi(t)$ relative to the propagating wave, but a phase shift of $\phi(t+K)$ to the backscattered wave, where K is the time difference between the passage of the waves through the modulator. Since $\phi(t+K)$ is time varying with respect to $\phi(t)$, the backscattered interference will average out over time, effectively eliminating the effects of the backscatter.

## Extended Dynamic Range Detection System Using A Gated Wave

The detection system described above with reference to Figures 1-10 is a very effective rotation sensing system within a certain range of rotational velocities for the loop 14. However, the dynamic range is limited by certain phenomena. Referring to Figure 9, it can be seen that the curve 80 is periodic. Therefore, if a large rotation rate causes a large enough $\Delta\phi_R$ to move the curve 94 past either the point 97 or the point 95, then the function 96 could repeat itself for a second, higher rotation rate. This second rotation rate would be substantially greater than the rotation rate which caused the Sagnac phase shift $\Delta\phi_R$ depicted in Figure 9, but would be indistinguishable from the lower velocity using the output optical signal 96. That is, if the $\Delta\phi_R$ from some larger rotational velocity were sufficiently large to move the curve 94 so as to operate between two new points 99' and 101' on the second lobe of the curve 80, then the output optical signal 96 would be indistinguishable in such a case from the case shown where the curve 94 operates between the points 99 and 101.

The present invention comprises a novel method, and associated apparatus, for extending the range of detection of optical fiber gyroscopes. In performing this method, the optical fiber gyroscope described above is modified to include modulation of the counter-propagating light waves at an additional frequency level $(f_m)$ which is much lower than the "proper" frequency or bias frequency $(f_b)$ described above by Equation 3.

With the reciprocal phase modulator located asymmetrically in the sensing loop, the application of a signal to that modulator can produce a differential shift $\Delta\phi_1$ between the phases of the two counter-propagating waves in the loop. This $\Delta\phi_1$ is time varying at the modulation frequency $f_b$, and contains no DC term because the phase shift produced by the modulator in one half of its modulation cycle is cancelled by that produced in the next half cycle.

In contrast, the differential phase shift $\Delta\phi_R$ which is caused by rotation can be a DC quantity and, thus, $\Delta\phi_1$ cannot be used to directly null out $\Delta\phi_R$. However, if the gyroscope is gated off during every other half cycle of the modulation waveform, the average $\Delta\phi_1$ produced in the remaining half cycles can be used to directly null out the rotation produced signal in those same half cycles. By monitoring the amplitude of the signal which produces the $\Delta\phi_1$ during the gated-on half cycles, it is possible to determine the rotation rate of the sensor.

With a bias frequency $f_b$ for biasing the operating point, as described above, by imposing an additional modulation frequency $f_m$ which is much lower than the bias phase modulation frequency, and then by gating the gyro off during every other half cycle of the $f_m$ waveform, a phase difference modulation waveform is produced whose time average value has a net DC level. By adjusting the amplitude of the second phase modulation at frequency $f_m$, this time average DC value of the phase difference modulation may be adjusted to effectively null out the $\Delta\phi_R$ produced in those same half cycles. The technique described above functions to effectively null out the effects of rotation on the output signal since no rotation is identified during the period of time in which the gated signal is off, and the effects of $\Delta\phi_R$ are cancelled by the phase modulation at frequency $f_m$ when the gated signal is on. Since the amount of rotation is proportional to the amplitude of phase difference modulation at $f_m$ which was necessary in order to null out the influence of $\Delta\phi_R$, the rotation rate may be determined by monitoring the amplitude of the second modulation signal. This method will be described in more detail below, in conjunction with a description of the apparatus utilized in practicing the method.

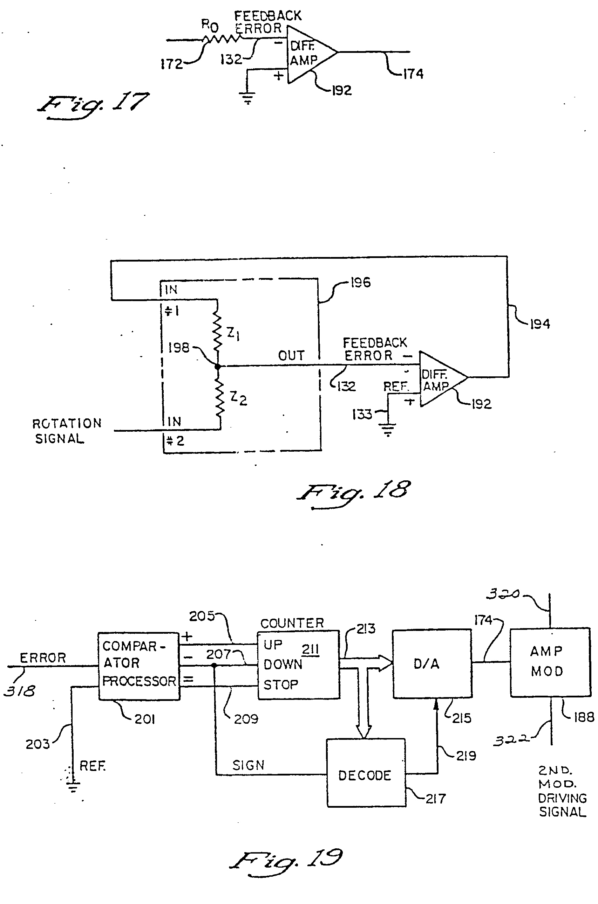

Referring to Figure 11, one preferred embodiment of a device is seen which, when used in conjunction with the method described herein, provides a significant increase in the range of detection, as well as an improvement in the reliability of the results provided by such detection. The detection system of Figure 11 embodies many of the components of the system illustrated in Figure 1. Thus, for purposes of simplicity, those components of Figures 1 and 11 which have the same structure and function have been assigned corresponding numbers.

In the circuit of Figure 11, the optical output signal from detector 30 is transmitted via line 48 through an amplifier 300, where its intensity is magnified sufficiently to be useable in the electronic circuitry. From amplifier 300, the output signal passes on line 302 to a conventional electronic gate 304. Operation of gate 304 is controlled by a gating signal received through line 306 from an ac signal generator 308. The phase of the signal on line 306 may be adjusted by use of conventional phase delaying devices in line 306.

Signal generator 308 produces a second phase modulation signal at a frequency $f_m$ which may be arbitrarily selected, but which should be much lower than that of the bias phase modulation which is typically set, as described previously, at the "proper" frequency, $f_p$.

The signal from gate 304 is synchronously gated onto line 310 at the second phase modulation frequency $f_m$ produced in signal generator 308. The signal is then transmitted into a band pass filter 312 which passes onto line 314 only the $f_b$ frequency component of the signal received from line 310. In the absence of any other signals to alter its magnitude, the signal at frequency $f_b$ on line 314 is representative of the amount of rotation experienced by loop 14.

As described below, the signal on line 314 is utilized in conjunction with the lock-in amplifier 46 to produce a feedback signal which controls the amplitude of the second phase modulation at frequency $f_m$. With proper amplitude adjustment of this second phase difference modulation, a signal may be generated which causes the phase modulator 38 to influence the counter-propagating waves in the loop. such that, on a time averaged basis, the signal at frequency $f_b$ on line 314 is driven towards zero, regardless of the loop rotation rate.

In order to produce the feedback signal described above, the signal on line 314 is transmitted to lock-in amplifier 46. In addition, the lock-in amplifier receives a reference signal from line 316 which corresponds to the bias modulation frequency $f_b$ produced by ac signal generator 40. Generally, this frequency $f_b$ corresponds to the "proper" frequency as calculated previously using equation (3).

In response to the signals received from lines 314 and 316, lock-in amplifier 46 generates an "error signal" which is proportional to the amplitude of the input signal from line 314 and which matches the frequency of the reference signal from line 316. This error signal will lie somewhere on the curve 100 of Figure 10. In this particular case, the error signal will be some DC level on the curve 100 for a fixed rotation rate resulting in a fixed amplitude of the first harmonic component on the input line 48. If the amplitude of the first harmonic component changes, the DC level of the error signal will change as the operating point shifts along the curve 100.

As explained previously, without the second phase modulation at frequency fm, the curve 100 is periodic because the curve 80 in Figure 9 is periodic. Therefore, the magnitude of the $f_b$ frequency component of the optical output signal 96 will vary periodically as increasing Sagnac phase shifts push the total phase shift curve 94 out into other lobes of the curve 80. That is, the point 134 (Figure 10) on the curve 100 represents a situation where the Sagnac phase shift has pushed the curve 94 out far enough so that maxima and minima of the total resultant phase shift curve translate through symmetrically balanced points on the second lobe of the curve 80. The resultant output waveform 96 would look like the output optical signal 96 depicted in Figure 8 for the zero rotation rate case and would have no first harmonic component. Because the waveform 96 has no first harmonic component in this situation, the output of the lock-in amplifier would be zero despite the fact that the rotation rate is non-zero.

The detection system of the present invention solves this problem through use of the feed back error signal, by adjusting the amplitude of the second phase modulation signal at frequency $f_m$ in response to changes in the first harmonic signal on line 314. The adjusted second phase modulation signal is then utilized, as described below, to adjust the phase modulation of the counter propagating waves in the loop so that the signal at frequency $f_b$ on line 314 is effectively cancelled. As a result, even though the rotation is such that the Sagnac phase shift is pushed to the point 134 on curve 100, Figure 10, the amplitude of the second phase modulation signal provides a ready indication of the actual rotation rate at high velocities which, without such feedback, would place the curve 94 beyond the point represented by 134 of Figure 10.

The function of adjusting the amplitude of the second phase modulation signal in response to the feedback error signal is performed by the error correction modulator 130. To accomplish this, the error correction modulator 130 receives an error signal from lock-in amplifier 46 via line 318 and also receives the second modulation signal from signal generator 308 on line 320. Preferably, the second modulation signal defines a sinusoidal waveform.

Upon receiving a non-zero error signal on line 318, the error correction modulator 130 increases or decreases the amplitude of the second phase modulation signal in response to the magnitude and sign of the error signal in order to reduce the magnitude of the error signal on the line 318 to zero, or to within a predetermined range of zero. When the predetermined level for the error signal on line 318 is reached, the modulator 130 maintains the amplitude of the second phase modulation signal until the error signal again changes.

Upon detecting a change in the error signal, the modulator 130 again changes the amplitude of the second phase modulation signal until the error signal on the line 318 is again reduced to zero or to within a predetermined range of zero. The adjusted second phase modulation signal is transmitted from the error correction modulator 130 onto line 322. The feedback approach described herein can also be applied to other types of gyroscopes, such as ones which are made of high birefringent fiber.

The adjusted second phase modulation signal on line 322 is combined with the bias modulation signal from signal generator 40 on line 324. This combined signal from line 324 is applied to phase modulator 38 so as to influence the counter propagating waves and, consequently, the output signal from detector 30, in accordance with the method described above. Thus, the second phase modulation signal functions to bias the phase difference of the counter-propagating light waves to substantially null the phase shift produced in the counter-propagating light wave phase difference by the rotation rate. In this context, the bias applied by the second phase modulation signal does not merely serve to compensate for the component of the output signal at frequency $f_b$ caused by the rotation rate, but it effectively nulls the phase difference signal produced by that rotation rate, thereby removing that related component from the output signal.

The rotation velocity may be determined by use of output display 208 which is connected through a band pass filter 326 to line 324. Specifically, the modulation signal from line 324 is connected by line 330 to filter 326 which allows only the signal at the second modulation frequency $f_m$ to pass. The signal from filter 326 passes on line 332 to the output display 208. The signal on display 208 corresponds to the amplitude of the second modulation signal at frequency $f_m$ and, thus, may be used to determine the rotation velocity. Display 208 and related circuitry for determining rotation velocity will be described in detail hereafter.

By reference to Figure 12, it is possible to graphically describe the resulting relative phase shift experienced between the counter propagating waves as a result of loop rotation and phase modulation in the apparatus illustrated in Figure 11. In Figure 12 it can be seen that the optical output signal (not shown) taken at the photodetector 30 comprises the resultant or total phase shift curve 350 which represents the sum of the Sagnac phase shift $\Delta\phi_R$ (represented by the constant bias 352 for constant rotational velocity) and the sinusoidally time varying, second phase difference modulation signal $\Delta\phi_R$ (cos $\omega_m t$) represented by the curve 354, and the sinusoidally time varying, bias phase difference modulation difference signal $\Delta\phi_b$ - (cos $\omega_b t$). The resultant phase shift $\Delta\phi$ is thus defined as:

$$\Delta\phi = (\Delta\phi_b \cos \omega_b t) + (\Delta\phi_m \cos \omega_m t) + \Delta\phi_R \qquad (11)$$

The time average value of $\Delta\phi$ can be adjusted to a value of approximately zero by gating off a portion of the signal. Thus, as illustrated in Figure 12, every other half cycle of the second phase difference modulation at frequency $f_m$ 354 is gated off. By adjusting the amplitude of the second phase difference modulation 354 in this situation, the portion of the bias modulation signal 350 which is gated on can be positioned about vertical axis 355.

In the circuit illustrated in Figure 11, gate 304 is turned on and off in synchronism with the second phase modulation signal by use of a gating signal from signal generator 308. Thus, with the gating signal on line 306 synchronized to switch gate 304 at each half cycle of the second phase modulation signal frequency $f_m$, the waveform of Figure 12 may be produced. It will be appreciated that during the time that the signals are gated off, as indicated in Figure 12, the value of zero will be present on the output of detector 30 (Figure 11).

The output signal at frequency $f_b$ which is produced as a result of the conditions described above is illustrated at 360 of Figure 13. It is noted that line 360 is, for purposes of illustration, not drawn to scale with respect to the second phase modulation waveform 354. Thus, it can be seen that by adjusting the amplitude of the second phase modulation signal 354 until the time average value of the gated portion of the output signal at the frequency $f_b$ equals zero, it is possible to determine the rotational velocity of the loop. Specifically, the rotation velocity is determined by observing the amplitude of the second phase modulation signal which caused the zero error signal.

In the absence of the modulation signal, the detector output amplitude $I_b$ at the bias modulation frequency $f_b$ may be described mathematically as

$$I_b = CP_0 J_1(\Delta\phi_b)\sin\phi \qquad (12)$$

Where C is a constant;

$P_0$ is the optical power incident on the detector;

$\Delta\phi_b$ is the amplitude of the phase difference modulation between the counter propagating waves;

$J_1$ is the first order bessel function of the first kind; and

$\Delta\phi$ is the phase difference between the counter propagating waves in the sensing coil.

When the second phase modulation signal is additionally applied at a frequency $f_m$ much lower than the bias modulation frequency $f_b$, the waveform of the phase difference modulation in the presence of rotation induced non-reciprocal phase shift $\Delta\phi_R$, is as illustrated in Figure 12. When the signal from the photodetector 30 is switched off during fifty percent of each cycle of phase modulation at frequency $f_m$, the demodulated output power at the bias modulation frequency $f_b$ is illustrated in Figure 13. Under the condition that the lock-in amplifier integrates the signal over many cycles of phase modulation at frequency $f_m$, the demodulated output power can be made zero by adjusting the amplitude of the phase difference modulation $\Delta\phi_m$. This means that the rotation induced non-reciprocal phase shift can be canceled on the time average by the phase modulation with gating. The demodulated output power is illustrated at 360 in Figure 13. The time average of this output signal 360 is described as:

$$I_b = -(C/T)\ P_0 J_1(\Delta\phi_b)\int_{-T/4}^{T/4}\sin(\Delta\phi_R + \Delta\phi_m\cos\omega_m t)dt \qquad (13)$$

where $T = 1/f_m$;

$\omega_m = 2\pi f_m$; and

$\Delta\phi_m$ is the amplitude of the phase difference modulation at frequency $f_m$.

The relationship between the Sagnac phase shift $\Delta\phi_R$ and the magnitude $\Delta\phi_m$ of the second modulation signal at the frequency $f_m$ to null the demodulated power to zero can be obtained from the relation:

$$\tan\Delta\phi_R = -\frac{4}{\pi}\ \frac{1}{J_0(\Delta\phi_m)}\ \sum_{odd}\frac{1}{n}\ J_n(\Delta\phi_m) \qquad (14)$$

Where: $J_n$ is the n-th order Bessell function.

The relationship of the amplitude of the second phase difference modulation to the value of $\Delta\phi_R$, described by equation 14 is graphically illustrated in Figure 14. The curve 370 of Figure 14 represents the response of the sensor to rotation when the gyro is operated in an electronically closed loop configuration. Curve 370 graphically illustrates the transfer function or scale factor which describes the amplitude of the second phase difference modulation $\Delta\phi_m$ which is necessary to substantially null out the Sagnac phase shift ($\Delta\phi_R$) in the gated apparatus illustrated in Figure 11.

It will be seen that the scale factor of Figure 14 has a monotonic behavior which provides for the dynamic range for gyroscope operation which is limited only by that of the phase modulator used. The small deviation of the scale factor curve 370 from complete linearity results from the fact that the net non-reciprocal phase shift is averaged to zero using a time varying phase shift instead of a DC phase shift. Thus, the invention provides a means to eliminate the ambiguity in the detector output signal for higher rotation rates where prior art sensors would not know which of several possible rotation rates was causing the detector output of that particular characteristic.

Because the frequency of the second phase modulation signal at frequency $f_m$ is arbitrary, that frequency and phase needs to have no fixed relationship with the bias phase modulation operated at the Proper frequency. As a result, less stability is required of the components which generate and control the two excitation signals. In addition, this lack of frequency and phase relationship between two modulations permits the electrical combining of the two excitation signals and their application to a single phase modulator without compromising the rotation sensors sensitivity.

Several of the other components of the apparatus of Figure 11 are described in more detail below.

Figure 15 shows one embodiment of the error correction modulator 130. In this embodiment, the error signal on the line 318 is coupled to the inverting input of an operational amplifier connected as an integrator. The exact structural details of practical integrators are well known to those skilled in the art and no further discussion of those details will be given here.

As is well known in the art of operational amplifiers, the negative feedback voltage developed across the capacitor tends to keep the point 170 at a virtual ground. That is, the voltage at the point 170 is held at or near zero volts by the negative feedback. However, no current flows to ground through this virtual short. The input current $i_{in}$ to the operational amplifier 169 through the output impedance of the lock-in amplifier 46, represented by the impedance $R_o 172$, is equal to the output error voltage of the lock-in amplifier 46 divided by its output impedance $R_o$, since the impedance to ground from the point 170 is zero. But since no current flows to ground from the node 170, the input current $i_{in}$ flows through the capacitor 168 and an output voltage $V_0$ relative to ground, builds up on the line 174 as a function of time. The expression for the output voltage $V_0$ as a function of time is:

$$V_0 = - \frac{1}{C} \int i_{in} dt \qquad (15)$$

where C is the value of the capacitor 168.

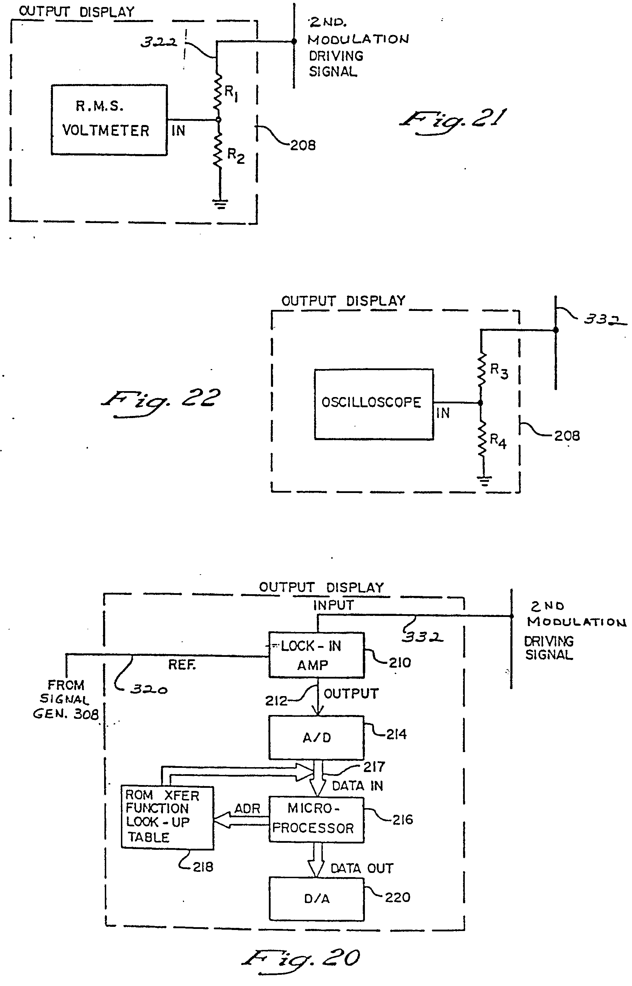

Referring to Figure 16, the response characteristics for the operational amplifier integrator 169 as shown. Figure 16(A) shows a hypothetical error signal on the line 318. The output voltage $V_0$ of the integrator on the line 174 is plotted in Figure 16(B).

It can be seen from Figure 16(B) that for zero error signals, the output voltage curve has zero slope and for increasing magnitudes of non-zero error signals, the magnitude of the slope of the output voltage curve for $V_0$ increases. That is, the sign of the slope depends upon whether the error signal is positive or negative, and the steepness of the slope at any instant in time depends upon the magnitude of the error signal at that instant in time.

As the error signal increases from the origin to the point 176, the integrator output signal $V_0$ increases to the point 176B. Referring again to Figure 15, a conventional balanced modulator such as an MC1496L, manufactured by Motorola, and associated circuits converts this input voltage $V_0$ on the line 174 to corresponding changes in the envelope of the driving signal on the line 322. That is, the modulator 188 amplitude modulates the fixed amplitude signal on the line 320 with the signal on the line 174. This driving signal on the line 322 is then transmitted to line 324 where it is combined with the bias modulation signal from generator 40 and applied to the phase modulator 38.

As the amplitude of the driving signal on the line 322 increases, the amplitude of the low frequency component in the optical output signal begins to rise. When it rises far enough, the time average value of the gated signal tends to cancel the first harmonic component caused by the rotation. This tends to reduce the error signal as shown between the points 176 and 177 in Figure 16(A). The decreasing error signal changes the steepness of the slope of the integrator output voltage $V_0$ in Figure 16(B) as shown between the points 176B and 177B. At the point 177 in Figure 16(A), the magnitude of the driving signal is just enough to cause cancellation of all of the rotation caused first harmonic component in the optical output, and thus the error signal will be zero. This is reflected by a flat, non-zero portion of the integrator output voltage curve for $V_0$ between the points 177B and 178B.

At the time 178 in this hypothetical situation, the rotation rate of the loop 14 changes such that the error signal changes sign and begins to increase in magnitude as shown between 178 and 180 in Figure 16(A). This causes a decrease in the output voltage $V_0$ because the current $i_{in}$ changes directions and the voltage on the capacitor 168 begins to change. This is shown between the joints 178B and 180B in Figure 16(B). The effect is to decrease the amplitude of the driving signal which causes the error signal to trend back toward zero as seen between the points 180 and 182 in Figure 16(A).

At the time 182 in the hypothetical situation, the rotation of the loop 14 again changes such that more first harmonic component is generated by the Sagnac phase shift so as to flatten the error signal curve as illustrated between the points 182 and 184. This causes the integrator output voltage to ramp downward at a constant slope to decrease the amplitude of the second or low frequency phase modulation signal between the points 182B and 184B.

At the time 184, the rotation rate of the loop again changes but the error signal is still negative and non-zero. The non-zero error signal causes the integrator output voltage $V_0$ to continue to decrease, thereby changing the amplitude of the driving signal and causing the error signal to move toward zero as shown between the points 184 and 186.

Once the error signal reaches zero, the integrator output voltage holds steady at whatever amplitude caused the cancellation of all or substantially all of the Sagnac generated first harmonic component. The situation at the time 186 represents a non-zero constant rotation rate in the loop 14 where the amplitude of the driving signal on the line 140 has been adjusted to the proper level to just cause cancellation of the Sagnac-generated first harmonic component in the optical output signal.

Those skilled in the art will appreciate that if rotation continues accelerating in one direction, the output voltage $V_0$ could rise above safe levels and cause component failures in, for example, the amplitude modulator 188 for the circuit of Figure 15. To prevent such occurrences, voltage limiting devices should be coupled to the integrator to limit the maximum positive and negative voltage excursions of $V_0$.

Referring to Figure 17, there is shown the preferred embodiment for a portion of the error-correction modulator circuit 130 to replace the integrator 190 in Figure 15. In this embodiment, a differential amplifier 192 has its inverting input coupled to the error signal on the line 318 and has its output is coupled to the amplitude modulator 188 by the line 174.

The manner in which the system depicted in Figure 17 works is better understood with reference to Figure 18, which depicts the overall rotation sensor in schematic terms with the components in the sensor represented by a three-port network 196 coupled to the differential amplifier 192. The optical portion and most of the electronic components of the sensor have been represented by the voltage divider impedance network 196 which has two inputs coupled to either end of the two impedances $Z_1$ and $Z_2$. The midpoint of this divider is coupled to the inverting input of the differential amplifier 192.

When a rotation is applied to the loop, a rotation signal (symbolic) will be applied to the second input of the three port network 196 which results in an error signal being applied to the line 318 coupled to the inverting input of the differential amplifier 192. The difference between this input error signal and the reference signal on the line 133, which in this case is ground potential, is amplified by the differential amplifier 192 and the inverted, amplified difference signal is applied to the output line 194. This output line is also coupled to the first input of the network 196 such that negative feedback occurs through the impedance $Z_1$ tending to cancel the voltage at the point 198 caused by the rotation signal.

The signal on the line 194 then tends to minimize the voltage swings at the point 198. The point 198 physically represents the output of the lock-in amplifier 46 in Figure 11. The impedances $Z_1$ and $Z_2$ are virtual impedances representing the overall transfer function and loop gain of the optical and electronic portions of the system.

The time response, phase margin, bandwidth and sensitivity of the system are matters of design choice depending upon the application and standard feedback system analysis can be used to establish system parameters.

The effect of the feedback through the impedance $Z_1$ is to restrict the swings in the error signal on the output line 318 of the lock-in amplifier to a small range represented by the box 200 in Figure 10. The range is a matter of design choice and depends upon the gain of the differential amplifier 192. Higher gain results in a smaller range of variation of the input signal, i.e., a smaller box but less stability.

Any structure which reacts to non-zero error signals so as to reduce the error signal to zero or substantially zero by increasing or decreasing the magnitude of the second phase modulation driving signal on the line 322, will suffice for purposes of the invention. For some embodiments it will be desirable to maintain the level of the second phase modulation driving signal at the cancellation amplitude which reduces the error signal to zero or near zero. The exact circuit used to accomplish this function is not critical to the invention.

An alternative circuit which could be used for the error correction modulator is as shown in Figure 19. In this embodiment, the error signal on the line 318 is coupled to the input of a comparison processor 201. The comparison processor has a reference voltage applied to its reference input 203 which is ground potential in this case. The comparison processor compares the error signal on the line 318 with the reference signal on the line 203 and generates one of three outputs. If the error signal is positive and non-zero, the output line 205 is activated as with a logic one level. If the error signal is negative and non-zero, the line 207 is activated. Finally, if the error signal is equal to the reference signal, the = line 205 is activated.

An up-down counter 211 has its up input coupled to the line 205 and begins counting up from zero when the line 205 is active. The binary count is continually changing the digital pattern on the output bus 213 as the count progresses where the data on the bus 213 at any moment represents the binary representation of the count.

A digital to analog converter continuously or periodically samples the value of the binary count on the bus 213 and converts the digital data to an analog output signal on the line 174. This analog signal is used by the conventional amplitude modulator 188 to amplitude modulate the second phase modulation driving signal on the line 320 and apply it to the line 322.

The changing amplitude of the second phase modulation driving signal is reflected in a changing error signal on the line 318. That is the error signal will be trending toward the reference signal voltage.

When the error signal reaches the reference voltage, the comparator processor 201 activates the line 209 which is coupled to the stop input of the counter 211, thereby stopping the count. The D/A converter then holds the amplitude level of the second harmonic driving signal steady at the then existing level until the error signal changes again.

When the error signal becomes negative and non-zero, the process repeats itself but the counter 215 starts counting down from zero or from the then existing positive count. If the count was zero when the line 207 was activated, a decoder 217 activates a change sign line 219 which causes the D/A converter to change the sign of the analog output voltage on the line 174. If the count was not zero when the line 207 was activated, the decoder 217 does not activate the line 219, and the D/A converter leaves the analog signal on the line 174 in the same sign as when the line 205 was activated but begins to lower the amplitude as the count decreases. This process continues until the line 209 is activated.

Because the transfer function is non linear in some regions, linear elements used to translate the amplitude of the second harmonic driving signal to the magnitude of the Sagnac phase shift introduce errors. A device may be used at the output to store the transfer function or to solve the transfer function for the rotation rate or Sagnac phase shift given the cancellation amplitude of the second harmonic driving signal. That is, it is advantageous to convert from the amplitude of the driving signal on the line 322 which cancels the first harmonic component in the output due to the Sagnac phase shift to the rotation rate or Sagnac phase shift itself. Such is the purpose of the output display circuit 208 in Figure 11.

Figure 20 shows the preferred circuit for the output display 208. The first harmonic of the driving signal as passed through band pass filter 326 onto line 322 is coupled to the input of a lock-in amplifier 210. The lock-in amplifier is tuned to the driving signal, i.e., it has as its reference signal the unmodulated signal on the line 320 from the signal generator 308 in Figure 11. The purpose of the lock-in amplifier 210 is to filter out all noise on the line 332 which clutters the desired waveform. This noise can result from noise on the power lines, electromagnetic disturbances, cross talk with the driving signal on the line 324 and other miscellaneous sources.

The output signal on the line 212 is proportional to the amplitude of the filtered driving signal at the output 212 of the lock-in amplifier, and is coupled to an analog to digital (A/D) converter 214 where it is converted to digital data. This data is used by a microprocessor or computer 216 to address a look-up table in a memory 218 which stores digital data regarding the rotation rate which corresponds to each amplitude of the driving signal as determined by the transfer function of Equation (15).

The digital data at the output 217 of the A/D converter 214 is used by the microprocessor 216 to access the proper address in the ROM 218 which stores the digital data indicating the corresponding Sagnac phase shift or rotation rate for that particular amplitude of the driving signal on the line 332. The program for the microprocessor 216 to perform this addressing function will be apparent to those skilled in the art and any program to perform this function will suffice. The digital data output from the ROM can then be converted to analog form by a digital to analog converter 220 or it can be used in its digital form.

In other embodiments, the microprocessor 216 could be programmed to solve the transfer function of Equation (14) by using the data from the A/D converter 214 as the variable $\Delta\phi_m$. In these embodiments, the ROM 218 would contain the program for performing the calculation required in Equation (14). The exact program used to perform this calculation is not critical, and programs will be known to those skilled in the art to perform this calculation. Any program which can perform this calculation will be adequate for purposes of the invention.

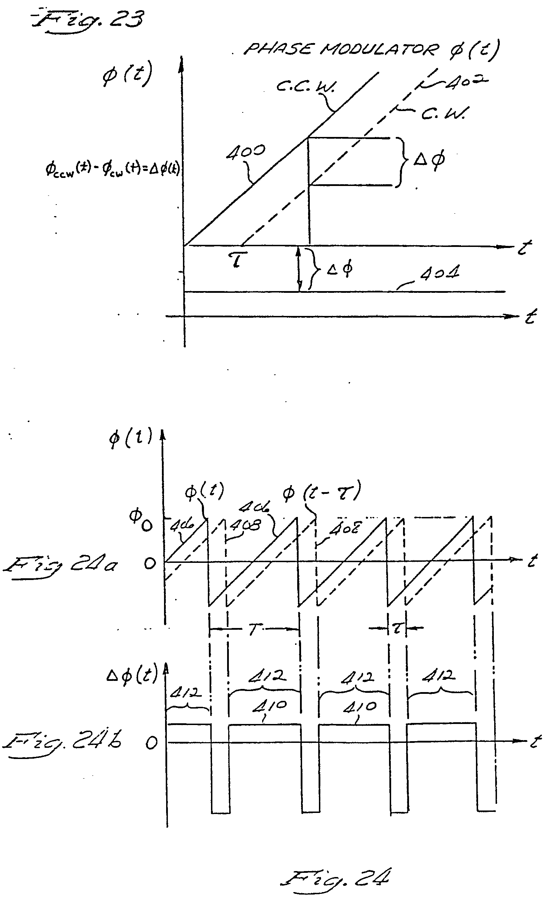

Other embodiments might use an R.M.S. voltmeter instead of the lock-in amplifier 210, but such a structure would lead to errors since any noise on the line 332 might be averaged in and misinterpreted as false amplitude of the driving signal. The R.M.S. voltmeter has its input at the midpoint of a voltage divider as shown in Figure 21. The driving signal is applied to the node 221 of a voltage divider comprised of the resistors R1 and R2. The resistors R1 and R2 are selected to reflect the slope of the transfer function in the linear region such that for a given amplitude of the driving signal at the node 221 a signal having an amplitude proportional to the rotation rate will be developed at the node 222. This signal is coupled to the input of an R.M.S. voltmeter to be read as the Sagnac phase shift or rotation rate.

Further, an oscilloscope could also be used instead of an R.M.S. voltmeter, as shown in Figure 23, to detect the amplitude of the driving signal. Again a linear scaling network comprised of the resistors R3 and R4 to scale the input to the oscilloscope. The embodiments of Figures 21 and 22 are most accurate in the linear regions of the transfer function.

Any other device capable of measuring waveforms at the lower modulation frequency could also be used for the output display circuit 208. For example, analog curve matching devices could be used to compensate for the transfer function curve and give an output proportional to the rotation rate. Further, the ROM look-up table and microprocessor of Figure 20 could be dispensed in the approximately linear regions of the transfer function. curve such that a simplified Figure 20 embodiment could also be used in the approximately linear region for an approximate result.

Another preferred embodiment of a method and apparatus for sensing rotation with a generally linear scale factor, over an extended dynamic range, may be described with reference to Figures 23-29.

In a device such as that illustrated in Figure 1, introduction of a time-varying signal through the asymmetrically positioned phase modulator 38 causes a phase difference between counter-propagating waves when measured at the output of detector 30. This induced differential phase shift $\Delta\phi(t)$ is defined as:

$$\Delta\phi(t) = \phi(t) - \phi(t-\tau) \tag{16}$$

Where $\phi(t)$ is the phase shift produced by the phase modulator at time t; and
$\tau$ is the time difference between interfering waves passing through the phase modulator 38.

Referring to Figure 23, it is seen that a DC phase difference between counter-propagating waves at a given time $\Delta\phi(t)$ may be achieved by applying a linear phase ramp such as that indicated at 400 to the counter-propagating waves through phase modulator 38. Specifically, linear phase ramp 400 represents the influence of the ramp signal input through modulator 38 on the wave propagating counter-clockwise in the sensing loop. The influence of the same input signal on the clockwise propagating signal is illustrated by line 402. The amount of difference $\tau$ between ramps 400 and 402 is dependent upon the asymmetric. location of the phase modulator 38 in the sensing loop.

The phase difference signal $\Delta\phi(t)$ between the counter-clockwise and the clockwise propagating waves is indicated at 404. Of particular interest is the fact that this phase difference is a DC value whose magnitude may be varied by adjusting the slope of the ramp signal. Thus, it becomes apparent that the ramp signal may be applied through phase modulator 38 to produce a DC phase difference magnitude which can be adjusted so as to effectively null out the rotation induced Sagnac phase shift.

One means of producing such a ramp function would be to utilize a frequency shifter located at an asymmetric position in the sensing loop. In this case $\Delta\phi$ would be defined as

$$\Delta\phi = 2\pi\tau\Delta f \tag{17}$$

Where $\Delta f$ is the amount of frequency shift. The use of a frequency shifter would provide an additional advantage of permitting frequency output to be utilized as a measure of rotation rate. However, a frequency shifter in a fiber form suitable for a gyroscope application has not been reported

Commonly used fiber-optic phase modulators, such as modulator 38 which modulates fiber length, cannot provide a continuous phase ramp to produce the DC differential phase shift between the counter-propagating waves. Thus, to utilize a phase modulator in this application requires the simulation of a phase ramp.

Figure 24 illustrates one waveform which may be utilized to simulate a phase ramp. Specifically, line 406 in Figure 24(A) illustrates the application of a saw-tooth wave to a counterclockwise propagating signal in the sensing loop. Line 408 indicates the influence of the same saw-tooth wave shape, applied from an asymmetrically positioned phase modulator, to a clockwise propagating signal in the sensing loop. Line 410 in Figure 24(B) represents the phase difference signal $(\Delta\phi(t))$ produced by the phase difference between the interfering waves illustrated in Figure 24(A).

As can be seen from the waveform represented by line 410, the phase difference cannot be constant at all times due to the resetting process and reciprocity of the two optical paths. However, during those periods indicated at 412 when line 410 defines a DC value, the DC Sagnac phase shift can be nulled out by adjusting the amplitude or frequency of the phase modulation. Thus, by applying the substantially DC phase bias to the phase difference of the counter-propagating light waves, the Sagnac phase shift experienced by the counter-propagating light wave phase difference is substantially nulled. It is further noted that, during the periods not included in the segments labeled 412, the zero Sagnac phase shift can be simulated by turning off the rotation signal received from detector 30 of Figure 1.

As a result, the rotation induced Sagnac phase shift can be effectively nulled by a phase modulation induced phase difference for part of the time, and by turning off the signal at the light source 10 or at or after the detector 30 for the rest of the time. The slope of the ramp, which determines the differential phase shift, can be controlled by adjusting the amplitude of the modulation signal.

Of course, it will be appreciated that other waveforms having a ramp type configuration could also be utilized to produce a similar effect. For example, a triangle waveform phase modulation could be utilized, with the understanding that the production of a DC phase modulation output signal would require that the signal be turned off for a longer period than with the saw-tooth wave due to the shorter ramp length in the triangle wave shape.

One of the most commonly used fiber optic phase modulators is a piezo-electric cylinder with several turns of fiber wrapped around it, as described previously. Unfortunately, the frequency response of this device is not uniform over a wide frequency range. As a result, it is almost impossible to achieve a saw-tooth wave phase modulation of the type illustrated in Figure 24, unless the amplitudes and phases of each Fourier component of the waveform are controlled.

One method for overcoming the problem of non-uniformity described above is to produce the saw-tooth or triangle waveform in an approximate manner by combining sinusoidal phase modulations in the all fiber optic rotation sensor. For example, a saw-tooth waveform may be simulated by combining the phase difference modulation at one frequency with the second harmonic of that frequency, with the amplitude of the second harmonic and the phase relationship of the waves properly adjusted. Likewise, the triangle waveform may be produced by combining the phase difference modulation at one frequency with the third harmonic of the frequency, which has been properly adjusted for amplitude and phase relationship.

Figure 25 illustrates one preferred collection of waveforms which may be utilized in the all fiber optic gyroscope to simulate a saw-tooth waveform. Specifically, the first phase modulation signal for simulating the saw-tooth wave comprises a sine wave 450 of Figure 25(A), which defines $\phi_1(t)$. The line 450 is illustrative of the effect of the sinusoidal phase modulation signal on the counterclockwise propagating wave in the sensing loop, and line 452 illustrates the influence of this same sinusoidal modulation signal on the clockwise propagating wave.

In Figure 25(B) line 454 describes the influence on the counterclockwise propagating wave of a second phase modulation signal which is at the the second harmonic frequency of the sinusoidal modulation signal 450. This second harmonic phase modulation signal is referred to as $\phi_2(t)$. Line 456 of Figure 25(B) illustrates the influence of the second harmonic phase modulation signal on the clockwise propagating wave.

Figure 25(C) illustrates the waveforms comprising the sum of the modulation signals of Figures 25(A) and 25(B). Specifically, the saw-tooth type waveform indicated at 458 comprises the summation of waveforms 450 and 454, and illustrates the response of the counterclockwise propagating wave to this modulation signal. Likewise, the saw-tooth type waveform illustrated at 460 describes the sum of the waveforms 452 and 456, and illustrates the effect of this waveform on the clockwise propagating waves in the rotation sensor.

Figure 25(D) illustrates the phase difference modulation with respect to time. This signal, indicated at 462, thus comprises the difference between the waveform 458 ($\phi(t)$) and waveform 460 ($\phi(t-\tau)$, where $\tau$ is the time difference between interfering waves passing through the phase modulator. The waveform of Figure 25(D) may be described as

$$\Delta\phi = \cos \omega_m t + 0.3 \cos 2 \omega_m t \qquad (18)$$

As described with respect to Figure 24, it will be noted that the waveform 462($\Delta\phi(t)$) includes portions indicated at 464 which are generally linear. By gating the phase difference signal as described earlier, it is possible to utilize these generally linear or DC portions of the phase difference modulation 462 to effectively null the rotation induced Sagnac phase shift. As with the saw-tooth waveform of Figure 24, the amplitude of the DC portion 464 can be controlled by adjusting the amplitude or frequency of phase modulation. Thus, the DC-like sections of phase difference modulation 464 can be used to null out Sagnac phase shift $\Delta\phi_R$, and signal turn off during the periods not included in the 464 sections can be used to simulate zero $\Delta\phi_R$ for the rest of the time.

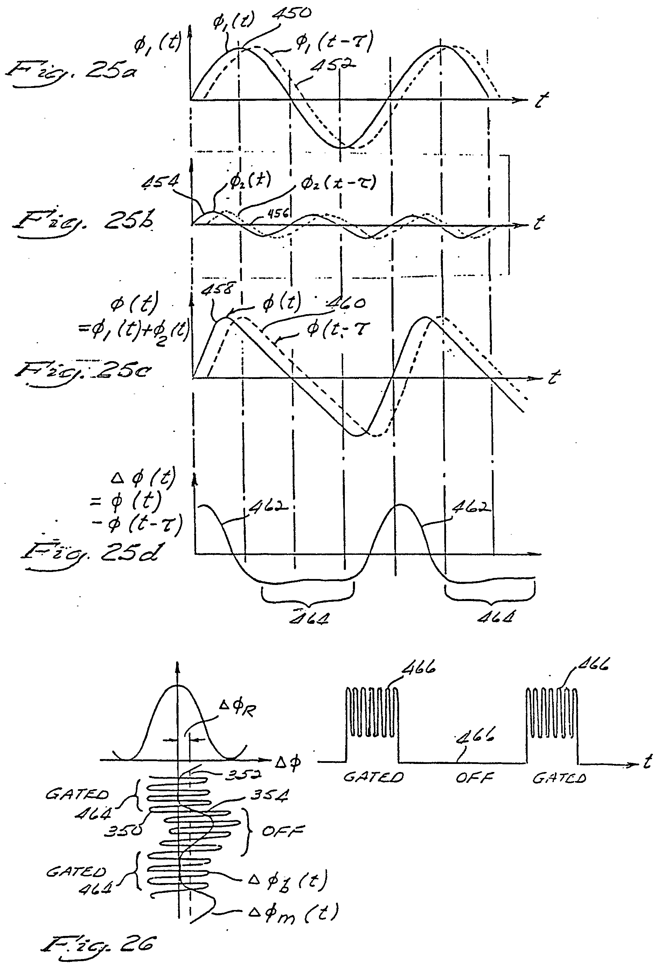

Figure 26 graphically illustrates the combined influence of the phase modulations which can exist if the saw-tooth waveform 458 of Figure 25(C) were introduced as a second modulation signal at a lower frequency ($f_m$) in the rotation sensor of Figure 11. Figure 26 also illustrates the output signal which would be detected as a result of phase modulation under those circumstances.

Specifically, the DC value for the phase shift resulting from the Sagnac phase shift at a fixed rotation rate is illustrated at 352. The phase modulation signal which is produced by the saw-tooth second modulation signal is illustrated at 354. In addition, the phase modulation produced by the bias modulation signal ($f_b$) is illustrated at 350. It is noted that, as with the sinusoidal modulation waveform utilized in the embodiment of Figure 11, the saw-tooth modulation signal should be at a frequency which is much lower than the bias modulation frequency $f_b$.

It is seen in Figure 26 that the phase modulation signals described above oscillate about the DC phase shift 352 which is $\Delta\phi_R$. It is also noted that the amplitude of the lower frequency, second phase modulation 354 has been adjusted so that the generally flat or DC portions of that line 354 are positioned on the vertical axis 355. Thus, by gating either the output of detector 30 or the light source 10 of the apparatus of Figure 11, it is possible to output only those portions of the resulting output signal which are produced during the DC segment of the lower frequency modulation signal 354 as indicated at 464. During this gated period 464, resulting signals oscillate about the vertical axis 355. During the remaining periods, the output signal equals zero, thus simulating a situation where the Sagnac phase shift is nulled out.

The output resulting from gating the rotation sensor as described above and during the periods indicated at 464 of Figure 26 produce an output signal having a waveform which is approximated by the waveform indicated at 466 of Figure 26.

Of particular interest is the fact that the output signal 466 includes no first harmonic, indicating that the Sagnac phase shift $\Delta\phi_R$ has been substantially nulled during the gated periods, and is not monitored during the off periods. Thus, by monitoring the amplitude of the second phase modulation signal, it is possible to determine the amount of rotation experienced by the gyroscope, even in extended dynamic conditions of high rotation. Preferred circuits for detecting this signal amplitude and determining the rotation rate were described previously with respect to the sensor illustrated in Figure 11.

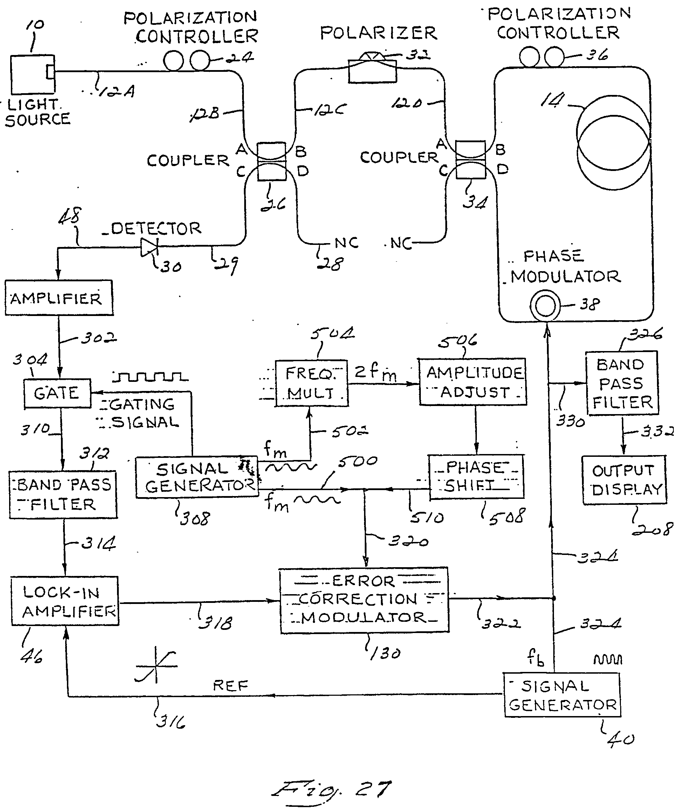

Figure 27 illustrates one preferred embodiment of a rotation sensor which may be used for monitoring rotation through use of a simulated ramp modulation signal. It is noted that many of the components of the apparatus illustrated in Figure 27 correspond both in construction and operation to elements contained in the apparatus of Figure 11. Therefore, corresponding elements are identified with corresponding numbers.

Based on its construction, it becomes apparent that the rotation sensor illustrated in Figure 27 functions in a manner which is substantially identical to the sensor of Figure 11. However, the sensor illustrated in Figure 27 replaces the sinusoidal second modulation signal with a low frequency modulation signal which is generally configured like a saw-tooth wave. In order to produce the saw-tooth modulation signal, the signal generator 308 transmits a sinusoidal waveform onto line 500. This sinusoidal waveform may be substantially identical to the waveform transmitted to line 320 from generator 308 in Figure 11. In addition, the sinusoidal waveform from signal generator 308 is also transmitted on line 502 to a frequency multiplier 504 which receives the sinusoidal modulation signal at frequency $f_m$ and doubles its frequency to produce a second harmonic at frequency $2f_m$ which is transmitted to an amplitude adjustment device 506.

Device 506 may comprise any conventional means for adjusting the amplitude of a signal, such as a potentiometer. From the amplitude adjust device 506, the signal is transmitted to the phase shift circuit 136 where its phase is shifted relative to the first harmonic phase modulation signal frcm the generator 308 in the relationship which generally corresponds to that between the waveforms illustrated in Figure 25(A) and 25(B). The amplitude adjust circuit 506 and the phase shift circuit 508 may be manually set by a one time adjustment so long as the sinusoidal modulation waveform produced by signal generator 308 is maintained at a constant frequency $f_m$.

The second harmonic waveform from phase shift circuit 508 is transmitted onto line 510 which connects with line 500. Thus, the first harmonic signal on line 500 and the second harmonic signal on line 510 are combined to produce a phase modulation waveform having a generally saw-tooth configuration such as that illustrated in Figure 25(C). The signals from lines 500 and 510 are combined and transmitted through line 320 to the error correction modulator 130, where the combined signal is processed in the manner which was described with reference to the rotation sensor illustrated in Figure 11.

As was explained above, the rotation sensor of Figure 27 functions to null out the DC influence of the Sagnac effect, by gating the output signal so as to detect only that portion of the output which results from phase modulation produced by the ramped portion of the saw-tooth wave. As a result, the gating signal on line 306 from signal generator 308 must be adjusted so that the gate 304 is turned on only during the ramped portion of the saw-tooth wave. It has been found that the gating signal from signal generator 308 should be set to gate approximately 30% of each period of the modulation signal on line 320. The portion of the waveform of line 320 which is gated may be identified by merely extrapolating upwardly the gated period identified at 464 in Figure 25(D).

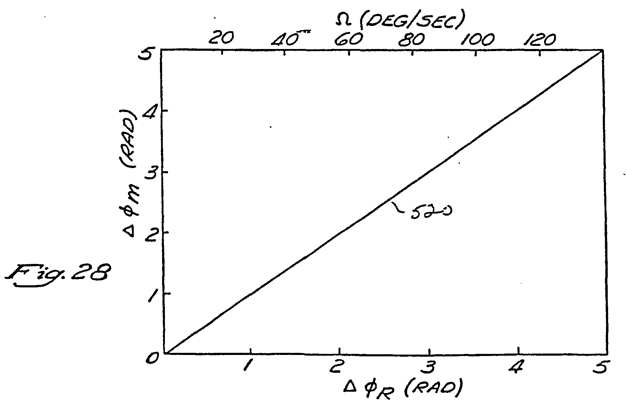

By reference to Figure 28, it is seen that the transfer function or a scale factor which results from the use of the rotation sensor of Figure 27 is substantially linear. This result is obtained because of the fact that the Sagnac phase shift $(\Delta\phi_R)$ is being nulled out by the phase difference modulation $(\Delta\phi_m)$ which defines a substantially DC signal. Thus, as is indicated by the graph of Figure 28, any increase in the magnitude of phase difference modulation produced by the Sagnac effect can be effectively nulled out by the corresponding increase in the magnitude of the phase difference modulation produced by the ramp portion of the saw-tooth wave modulation signal.

As with the rotation sensor of Figure 11, the band pass filter 326 passes the signal at frequency $f_m$ from line 330 to an output display 208 which may be utilized to determine the rotation velocity by identifying the amplitude of the phase modulation signal which is necessary to cancel out the Sagnac phase shift.

The linearity of the scale factor illustrated in Figure 28 practically eliminates the source wave length dependence of the gyroscope scale factor. This is possible because the amplitude of the phase difference modulation has the same wavelength dependence to the applied signal as the Sagnac phase shift has to the rotation rate $(\frac{1}{\lambda})$. Considering the fact that the wavelength of a light source is difficult to control, this phase modulation approach can improve the stability of the scale factor. The stability of the system is further improved if the feedback modulation frequencies $f_m$ and $2f_m$ do not coincide with the resonance frequency of the phase modulator. In addition, if harmonic frequencies of $f_m$ do not coincide with the bias modulation frequency $f_b$, then additional offset or noise in the rotation signal is also eliminated.

In the rotation sensor of Figure 27, the gating time interval and relative amplitudes of the two frequency components can be adjusted to provide a linearity of the scale factor on the order of $10^{-5}$ up to 20 radians of Sagnac phase shift assuming a linear response of the phase modulator to the applied signal (e.g., when $\Delta\phi(t) \alpha (\cos (\omega_m t) + 0.4 \cos (2\omega_m t))$).

In both the rotation sensor of Figure 11 and that of Figure 27, the gating process introduces a possibility of loss of the optical power, and loss of rotation information during the time that the sensor is gated off. The device of Figure 11(A), typically involves loss of half of the optical power since the device is gated off for approximately half the time. In the device of Figure 27, with gating of approximately 30% of the waveform, the loss of optical output could occur during approximately 70% of the time. This information loss can result in an error in measured rotation angle, $\theta$, when a sudden change in angle occurs within a gated-out time interval. Take as an example the case of a full cycle of square wave angular acceleration using an acceleration rate of $|t^2\theta/dt^2| = 1,000°/sec^2$, which is a value used to represent maximum expected acceleration in many applications. For a typical gating frequency $f_m$ of 15 kHz, and with gating occurring during half of the time, an acceleration of the above amount within the first half of a gated out time interval followed by a deceleration of the same magnitude within the second half of the interval, leads to an error in $\theta$ of about $2.8\times10^{-7}$ degrees. Thus, it becomes apparent that the reliability of the phase sensing devices described herein is very good, with the influence of the gating arrangement causing only a very small likelihood of error in the measurement of the rotation velocity.

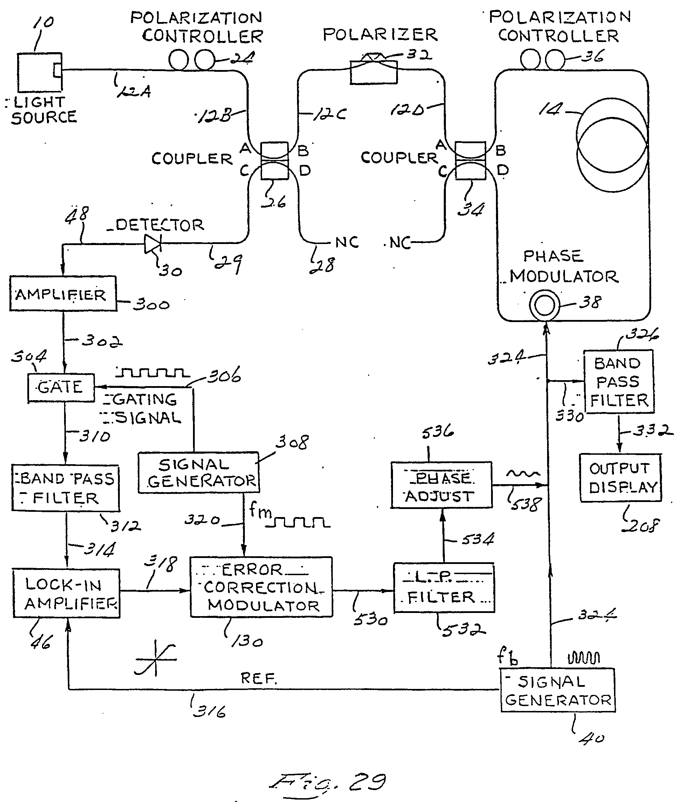

Figure 29 illustrates another embodiment of the rotation sensor utilizing the saw-tooth waveform. In this embodiment, the signal generator 308 produces a modulation signal at the frequency $f_m$ which comprises a train of square wave pulses. These square wave pulses contain harmonics of frequency $f_m$, including $2f_m$. These square wave pulses are transmitted via line 320 to the error correction modulator 130 and are processed in the manner described previously with respect to the sensors illustrated in Figures 11 and 27.

The square wave signal produced by modulator 130 is transmitted via line 530 to a low pass filter 532. Filter 532 eliminates all but the first and second harmonics of the signal transmitted from error correction modulator 130. The filtered signal is then transmitted via line 534 to a phase adjust circuit 536. One particular embodiment of phase adjust circuit 536 comprises a tunable band pass filter which is utilized to modify the phase of the second harmonic with respect to the first harmonic, so as to produce the desired saw-tooth waveform for the phase modulation.

The saw-tooth wave modulation signal from phase adjust 536 is transmitted onto line 538, where it is combined with the sinusoidal modulation frequency $f_b$ produced by signal generator 40 on line 324. The resulting signal is applied to the phase modulator 38 as the modulation signal. In all other respects, the sensor of Figure 29 functions in a manner identical to the sensor of Figure 27.

One particular embodiment of the rotation sensor illustrated in Figure 29 is constructed and evaluated as follows. The fiber length and radius of the sensing coil is about 580 meters, and 7 centimeters, respectively. The wave length of light source utilized is about 830 nanometers. The phase modulator 38 comprises a piezoelectric hollow cylinder with several turns of fiber wrapped around it. The first resonance frequency of the piezoelectric cylinder is about 20 khz. The bias modulation frequency $f_b$ produced by signal generator 40 is 172 khz, producing an amplitude of phase difference modulation ($\Delta\phi_b$) is approximately equal to 1.8 rad.

The saw-tooth waveform frequency modulation may be produced as follows. A train of square wave pulses is generated by the signal generator 308 which comprises a pulse generator, at a repetition frequency $f_m$ of 15 khz. The frequency spectrum of this signal contains harmonics of the fundamental frequency $f_m$. A low pass electric filter 532 suppresses all the frequency component leaving only the first and second harmonics of $f_m$. The relative amplitude of these frequency components (15 khz and 30 khz) may be adjusted by varying the width of square pulses from the pulse generator. A variable band pass filter comprises the phase adjust circuit 536, which is utilized to adjust the relative phase of the two frequency components. This signal, combined with the bias modulation signal from generator 40 is applied to the phase modulator 38.

The electric signal from the silicon photo detector 30 is gated with an electric switch or gate 304 by a synchronizing signal from the pulse generator 308, transmitted on line 306. The phase of gating may be adjusted by adjusting the pulse delay of the trigger signal. Approximately 30% of the signal from detector 30 is allowed to pass through the gate 304 to obtain a linearized scale factor. The signal from gate 304 is transmitted across line 310 and through band pass filter 312, which allows passage only on the bias modulation frequency $f_b$. This signal is then measured in the lock-in amplifier 46, as compared with the reference signal at the $f_b$ frequency, from signal generator 40. The comparison of the signal from filter 312 against the reference signal produce the error signal from lock in amplifier 46, which is transmitted to the error correction modulator 130 as was described previously in the specification. The actual scale factor which results from operation of the circuit of Figure 29 corresponds to the scale factor illustrated at 520 in Figure 28.

Although the rotation sensors described herein illustrate use of a single phase modulator, it will be appreciated by those skilled in the art that separate phase modulators could be utilized for the bias phase modulation and the lower frequency second phase modulation. Furthermore, it will be recognized that other waveforms could be utilized in conjunction with the gating arrangement described herein, with acceptable results. Such alternate embodiments are considered to be within the scope of the invention as described and claimed herein.

In summary, not only does the invention described herein comprise a significant improvement over the prior art in extending the dynamic range for rotation sensing over a very broad range of rotation velocities, but it also overcomes other long existent problems in the industry by (1) providing a means for obtaining extended dynamic rotation sensing while optionally utilizing only a single phase modulator; (2) providing for such rotation sensing with greatly improved stability by substantially suppressing the source wavelength dependence of the scale factor; and (3) providing a rotation sensor with significantly increased accuracy and reliability by linearizing the scale factor or transfer function and, thereby, significantly simplifying the signal processing required in the sensing device.

## Claims

1. Fiber optic apparatus for sensing and measuring rotation utilizing an optical loop, comprising a light source (10) providing counterpropagating lightwaves in said loop, a detector (30) responsive to said counterpropagating lightwaves, the phase difference between said counterpropagating lightwaves being shifted in accordance with said rotation, said lightwaves being phase modulated at a first frequency ($f_b$) and being combined to form an output signal, characterized by:

   a gating circuit (46, 304, 312) for blanking at least a component of the output signal at selected times to provide a gated signal;

   a phase difference modulator (38) for biasing the counterpropagating lightwave phase difference at a second, substantially fixed frequency ($f_m$);

   a control device responsive to the output of said detector for adjusting the periodic bias of said phase difference modulator at said second frequency ($f_m$), so as to null a component in the gated signal caused by said rotation; and

   a circuit (326, 208) for measuring the amount of periodic bias to determine the amplitude of said rotation.

2. Fiber optic apparatus for sensing and measuring rotation as defined in Claim 1, wherein said gating circuit (46, 304, 312) blanks said component at said second frequency ($f_m$).

3. Fiber optic apparatus for sensing and measuring rotation as defined in Claim 1, wherein said second frequency ($f_m$) is less than said first frequency ($f_b$).

4. Fiber optic apparatus for sensing and measuring rotation as defined in any one of the preceding claims, further characterized by a signal generator (308) for producing a modulation signal at said second frequency ($f_m$), said signal generator driving said phase difference modulator (38) through said control device.

5. Fiber optic apparatus for sensing and measuring rotation as defined in Claim 4, wherein said gating circuit (46, 304, 312) comprises:
   a gating device connected to said detector and responsive to said signal generator (308) for blanking out selected portions of the counterpropagating lightwaves; and
   a feedback circuit (46, 312) connecting said gating device (304) to said control device for comparing the output of the gating device (304) with a reference signal at said first frequency ($f_b$) and for driving said control device to adjust the amplitude of modulation at said first frequency ($f_b$) to cancel the component in the gated signal caused by said rotation.

6. Fiber optic apparatus for sensing and measuring rotation as defined in Claim 1, wherein said phase difference modulator (38) applies a substantially DC phase bias to the counterpropagating lightwaves.

7. Fiber optic apparatus for sensing and measuring rotation as defined in Claim 6, further comprising a biasing circuit for applying a phase-ramp modulation to the counterpropagating lightwaves at said second frequency ($f_m$).

8. Fiber optic apparatus for sensing and measuring rotation as defined in Claim 7, wherein the biasing circuit comprises:
   a signal generator (308) for producing a first modulation signal at the second frequency ($f_m$);
   an electronic circuit (504, 506, 508) responsive to the first modulation signal for modifying the first modulation signal so as to produce a resultant modulation signal, wherein at least a portion of said resultant modulation signal defines a ramp waveform; and
   an error correction modulator (130) electrically connected to the signal generator (308) for adjusting the amplitude of the resultant modulation signal in response to said rotation;
   said phase modulator (38) applying the resultant modulation signal to the counterpropagating waves so that, during the ramp waveform portion of said resultant modulation signal, the substantially DC component of the phase difference modulation caused by the phase-ramp modulation substantially nulls the phase shift produced in the phase difference by said rotation.

9. Fiber optic apparatus for sensing and measuring rotation as defined in Claim 8, further comprising:
   a gating device (304) electrically connected to the detector (30) and responsive to the signal generator (308) for blanking out selected portions of the phase difference signal; and
   a feedback circuit (46, 312) electrically connected to the gating device (304) for detecting the non-blanked out portion of the phase difference signal, comparing this with a reference signal, and producing a feedback error signal which controls the error correction modulator (130) such that the amplitude of the resultant modulation signal is adjusted to reduce the amplitude of the feedback error signal.

10. Fiber optic apparatus for sensing and measuring rotation as defined in Claim 8, wherein the electronic circuit (504, 506, 508) comprises:
   a frequency multiplier (504) electrically coupled to the signal generator (308) for providing a second modulation signal which is a harmonic of the first modulation signal;
   an amplitude adjust circuit (506) for adjusting the amplitude of said harmonic to correspond with the amplitude of the first modulation signal;
   a phase shifter (508) for shifting the phase of said harmonic with respect to the first modulation signal so that at least a portion of the sum of the waveforms of the first and the second modulation signals defines a ramp waveform; and
   an electrical connection between the signal generator (308) and the phase shifter (308) for combining the first and second modulation signals to form the resultant modulation signal.

**11.** A method of determining rotation utilizing an optical loop having propagating there in counter-propagating lightwaves which are phase modulated at a first frequency ($f_b$) and which are combined to form an output signal, characterized by the steps of:

blanking at least a component of the output signal at selected times to provide a gated signal;

biasing the phase of the counterpropagating lightwaves at a second substantially fixed frequency ($f_m$), to substantially null a component in the gated signal which is produced by said rotation; and

measuring the amount of bias to determine said rotation.

**12.** A method of determining rotation as defined in Claim 11, wherein the step of biasing the phase of the counterpropagating lightwaves comprises the steps of:

phase modulating the counterpropagating lightwaves at said second, substantially fixed frequency ($f_m$);

providing a feedback signal in response to the output signal, said feedback signal comprising a measure of the amount of phase shift produced by said rotation in the counterpropagating lightwave phase difference which has not been nulled by the phase modulation; and

adjusting the amplitude of the phase modulation at the second frequency ($f_m$) in response to the feedback signal.

**13.** A method of determining rotation as defined in Claim 11, wherein the step of measuring the amount of bias comprises the step of monitoring the amplitude of the phase modulation at said second frequency ($f_m$).

**14.** A method of determining rotation as defined in Claim 11, wherein said biasing step comprises the step of applying a phase-ramp modulation to the counterpropagating lightwaves during at least a portion of a period corresponding to said second frequency ($f_m$) so as to apply a substantially DC phase bias to the counterpropagating lightwave phase difference and to substantially null a component in the gated signal which is produced by said rotation.

**Revendications**

**1.** Appareil à fibre optique pour détecter et mesurer la rotation utilisant une boucle optique, comprenant une source de lumière (10) produisant des ondes de lumière se propageant dans des directions contraires dans ladite boucle, un détecteur (30) sensible auxdites ondes de lumière se propageant dans des directions contraires, la différence de phase entre lesdites ondes se propageant dans des directions contraires étant décalée en fonction de la rotation, lesdites ondes étant modulées en phase à une première fréquence ($f_b$) et étant combinées de façon à former un signal de sortie, caractérisé par:

un circuit de porte (46, 304, 312) pour masquer au moins une composante du signal de sortie à des moments sélectionnés de façon à produire un signal masqué;

un modulateur de différence de phase (38) pour biaiser la différence de phase des ondes se propageant dans des directions contraires à une seconde fréquence sensiblement fixée ($f_m$);

un appareil de contrôle sensible à la sortie dudit détecteur de façon à régler le biais périodique dudit modulateur de différence de phase à ladite seconde fréquence ($f_m$), de façon à annuler une composante dans le signal masqué due à la rotation; et

un circuit (326, 208) pour mesurer la quantité de biais périodique de façon à déterminer l'amplitude de ladite rotation.

**2.** Appareil à fibre optique pour détecter et mesurer la rotation tel qu'il est revendiqué dans la revendication 1, dans lequel ledit circuit de porte (46, 304, 312) masque ladite composante à ladite seconde fréquence ($f_m$).

**3.** Appareil à fibre optique pour détecter et mesurer la rotation tel qu'il est revendiqué dans la revendication 1, dans lequel ladite seconde fréquence ($f_m$) est inférieure à ladite premiere fréquence ($f_b$).

**4.** Appareil à fibre optique pour détecter et mesurer la rotation tel qu'il est revendiqué dans l'une quelconque des revendications précédentes, caractérisé en outre par un générateur de signaux (308) pour produire un signal de modulation à ladite seconde fréquence ($f_m$), ledit générateur de signaux

commandant ledit modulateur de différence de phase (38) par ledit appareil de contrôle.

5. Appareil à fibre optique pour détecter et mesurer la rotation tel qu'il est revendiqué dans la revendication 4, dans lequel le circuit de porte (46, 304, 312) comprend:

un appareil de masquage relié audit detecteur et sensible audit générateur de signaux (308) pour masquer des parties sélectionnées des ondes se propageant dans des directions contraires; et
un circuit de retour (46, 312) reliant ledit appareil de masquage (304) audit appareil de contrôle pour comparer la sortie de l'appareil de masquage (304) à un signal de référence à ladite première fréquence ($f_b$) et pour commander ledit appareil de contrôle de façon à régler l'amplitude de la modulation à ladite première fréquence ($f_b$) afin d'annuler la composante dans le signal masqué due à ladite rotation.

6. Appareil à fibre optique pour détecter et mesurer la rotation tel qu'il est revendiqué dans la revendication 1, dans lequel ledit modulateur de différence de phase (38) applique un biais de phase sensiblement en continu aux ondes se propageant dans des directions contraires.

7. Appareil à fibre optique pour détecter et mesurer la rotation tel qu'il est revendiqué dans la revendication 6, comprenant en outre un circuit de biaisage pour appliquer une modulation en rampe de phase aux ondes se propageant dans des directions contraires à ladite seconde fréquence ($f_m$).

8. Appareil à fibre optique pour détecter et mesurer la rotation tel qu'il est revendiqué dans la revendication 7, dans lequel le circuit de biaisage comprend:

un générateur de signaux (308) pour produire un premier signal de modulation à la seconde fréquence ($f_m$);
un circuit électronique (504, 506, 508) sensible au premier signal de modulation pour modifier le premier signal de modulation de façon à produire un signal de modulation résultant, dans lequel au moins une partie dudit signal de modulation résultant définit une onde en forme de rampe; et
un modulateur de correction d'erreur (130) relié électriquement au générateur de signaux (308) pour régler l'amplitude du signal de modulation résultant en réponse à ladite rotation;
ledit modulateur de phase (38) appliquant le signal de modulation résultant aux ondes se propageant dans des directions contraires de telle sorte que, pendant la partie en forme de rampe dudit signal de modulation résultant, la composante sensiblement continue de la modulation de différence de phase produite par la modulation en rampe de phase annule sensiblement le décalage de phase produit dans la différence de phase par ladite rotation.

9. Appareil à fibre optique pour détecter et mesurer la rotation tel qu'il est revendiqué dans la revendication 8, comprenant en outre:

un appareil de masquage (304) relié électriquement au détecteur (30) et sensible au générateur de signaux (308) pour masquer des parties sélectionnées du signal de différence de phase; et
un circuit de retour (46, 312) relié électriquement à l'appareil de porte (304) pour détecter la partie non masquée du signal de différence de phase, comparer cette partie à un signal de référence, et produire un signal d'erreur de retour qui contrôle le modulateur de correction d'erreur (130) de telle sorte que l'amplitude du signal de modulation résultant est réglée de façon à réduire l'amplitude du signal d'erreur de retour.

10. Appareil à fibre optique pour détecter et mesurer la rotation tel qu'il est revendiqué dans la revendication 8, dans lequel le circuit électronique (504, 506, 508) comprend:

un multiplicateur de fréquence (504) électriquement couplé au générateur de signaux (308) pour produire un second signal de modulation qui est une harmonique du premier signal de modulation;
un circuit de réglage de l'amplitude (506) pour régler l'amplitude de ladite harmonique de façon à correspondre à l'amplitude du premier signal de modulation;
un décaleur de phase (508) pour décaler la phase de ladite harmonique par rapport au premier signal de modulation de telle sorte qu'au moins une partie de la somme des formes d'onde des premier et second signaux de modulation définisse une onde en forme de rampe; et
une connection électrique entre le générateur de signaux (308) et le décaleur de phase (508) pour combiner les premier et second signaux de modulation de façon à former le signal de modulation résultant.

11. Methode de détermination de la rotation utilisant une boucle optique où se propagent des ondes se propageant dans des directions contraires qui sont modulées en phase à une première fréquence ($f_b$) et qui sont combinées de façon à former un signal de sortie, caracterisée par les étapes suivantes:

masquer au moins une composante du signal de sortie à des moments sélectionnés de façon à produire un signal masqué;

biaiser la phase des ondes se propageant dans des directions contraires à une seconde fréquence sensiblement fixée ($f_b$), de façon à annuller sensiblement un composante dans le signal masqué qui est produit par ladite rotation; et

mesurer la quantite de biais de façon à déterminer ladite rotation.

12. Méthode de détermination de la rotation telle qu'elle est définie dans la revendication 11, dans laquelle les étapes de biaisage de la phase des ondes se propageant dans des directions contraires comprend les étapes suivantes:

moduler en phase les ondes se propageant dans des directions contraires à ladite seconde fréquence sensiblement fixée ($f_m$);

produire un signal de retour en réponse au signal de sortie, ledit signal de retour comprenant une mesure de la quantité de décalage de phase produit par ladite rotation dans la différence de phase des ondes se propageant dans des directions contraires qui n'a pas été annullée par la modulation de phase; et

régler l'amplitude de la modulation de phase à la seconde fréquence ($f_m$) en réponse au signal de retour.

13. Méthode de détermination de la rotation telle qu'elle est définie dans la revendication 11, dans laquelle l'étape de mesure de la quantité de biais comprend l'étape de contrôle de l'amplitude de la modulation de phase à ladite seconde fréquence ($f_m$).

14. Méthode de détermination de la rotation telle qu'elle est définie dans la revendication 11, dans laquelle l'étape de biaisage comprend l'étape d'application d'une modulation en rampe de phase aux ondes se propageant dans des directions contraires pendant au moins une partie de la période correspondant à ladite seconde fréquence ($f_m$) de façon à appliquer un biais de phase sensiblement continu à la différence de phase des ondes se propageant dans des directions contraires et à annuller sensiblement une composante dans le signal masqué qui est produit par ladite rotation.

**Ansprüche**

1. Faseroptisches Gerät zum Erfassen und Messen einer Rotation unter Verwendung einer optischen Schleife, mit einer Lichtquelle (10) zum Erzeugen von in Gegenrichtung sich ausbreitenden Lichtwellen in der Schleife, mit einem Detektor (30), der auf die in Gegenrichtung sich ausbreitenden Lichtwellen anspricht, wobei die Phasendifferenz zwischen den in Gegenrichtung sich ausbreitenden Lichtwellen entsprechend der Rotation verschoben wird, und die Lichtwellen bei einer ersten Frequenz ($f_b$) phasenmoduliert und kombiniert werden, um ein Ausgangssignal zu bilden, gekennzeichnet durch

eine Torschaltung (46, 304, 312) zum Austasten wenigstens einer Komponente des Ausgangssignales eine bestimmte Zahl von Malen zum Erzeugen eines Torsignales;

einen Phasendifferenzmodulator (38) zum Vor-Einstellen der Phasendifferenz der sich in Gegenrichtung ausbreitenden Lichtwellen, bei einer zweiten, im wesentlichen festen Frequenz ($f_m$);

einen Regler, der auf den Ausgang des Detektors anspricht, um die periodische Vor-Einstellung des Phasendifferenzmodulators bei der zweiten Frequenz ($f_m$) zu justieren, um eine Komponente zu kompensieren, die im Torsignal zufolge der Rotation enthalten ist; und

eine Schaltung (325, 208) zum Messen des Maßes der periodischen Vor-Einstellung zwecks Ermittelns der Amplitude der Rotation.

2. Faseroptisches Gerät zum Erfassen und Messen einer Rotation gemäß Anspruch 1, wobei die Torschaltung (46, 304, 312) die KOmponente bei der zweiten Frequenz ($f_m$) austastet.

3. Faseroptisches Gerät zum Erfassen und Messen einer Rotation gemäß Anspruch 1, wobei die zweite Frequenz ($f_m$) kleiner als die erste Frequenz ($f_b$) ist.

4. Faseroptisches Gerät zum Erfassen und Messen einer Rotation gemäß einem der vorausgegangenen Ansprüche, gekennzeichnet durch einen Signalgenerator (308) zum Erzeugen eines Modulationssignales bei der zweiten Frequenz ($f_m$), wobei der Signalgenerator den Phasendifferenzmodulator (38) mittels des Reglers anzeigt.

5. Faseroptisches Gerät zum Erfassen und Messen einer Rotation gemäß Anspruch 4, wobei die Torschaltung (46, 304, 312 umfaßt:

eine Torschaltvorrichtung, die an den Detektor angeschlossen ist, und die auf den Signalgenerator (308) anspricht, um ausgewählte Bereiche der sich in Gegenrichtung ausbreitenden Lichtwellen auszutasten; und

eine Rückführschaltung (46, 312), die die Torschaltvorrichtung (304) mit dem Regler verbindet, um den Ausgang der Torschaltvorrichtung (304) mit einem Bezugssignal bei der ersten Frequenz ($f_b$) zu vergleichen und zum Antreiben des Reglers, um die Amplitude der Modulation bei der ersten Frequenz ($f_b$) zu justieren und die Komponente im Torsignal, verursacht durch die Rotation, aufzuheben.

6. Faseroptisches Gerät zum Erfassen und Messen einer Rotation nach Anspruch 1, wobei der Fasendifferenzmodulator (38) eine im wesentlichen gleichstromförmige Phasen-Voreinstellung auf die sich in Gegenrichtung ausbreitenden Lichtwellen aufbringt.

7. Faseroptisches Gerät zum Erfassen und Messen einer Rotation gemäß Anspruch 6, umfassend eine Voreinstellungsschaltung zum Aufbringen einer Phasen-Rampenmodulation auf die sich in Gegenrichtung ausbreitenden Lichtwellen bei der zweiten Frequenz ($f_m$).

8. Faseroptisches Gerät zum Erfassen und Messen einer Rotation gemäß Anspruch 7, wobei die Vor-Einstellungsschaltung umfaßt:

einen Signalgenerator (308) zum Erzeugen eines ersten Modulationssignales bei der zweiten Frequenz ($f_m$);

eine elektronische Schaltung (504, 506, 508), die auf das erste Modulationssignal anspricht, um das erste Modulationssignal derart zu modifizieren, daß ein resultierendes Modulationssignal erzeugt wird, wobei wenigstens ein Teil des resultierenden Modulationssignales eine rampenförmige Schwingung definiert;

einen Fehler-Korrektur-Modulator (130), der elektrisch an den Signalgenerator (308) angeschlossen ist, um die Amplitude des resultierenden Modulationssignales in Abhängigkeit von der Rotation;

wobei der Phasenmodulator (38) das resultierende Modulationssignal auf die sich in Gegenrichtung ausbreitenden Wellen aufbringt, so daß während des rampenförmigen Schwingungsteiles des resultierenden Modulationssignales die im wesentlichen gleichstromförmige Komponente der Phasendifferenzmodulation, erzeugt durch die Phasen-Rampenmodulation, im wesentlichen die Phasenverschiebung kompensiert, die in der Phasendifferenz durch die Rotation erzeugt wurde.

9. Faseroptisches Gerät zum Erfassen und Messen einer Rotation gemäß Anspruch 8, weiterhin umfassend:

eine Torschaltvorrichtung (304), die elektrisch an den Detektor (30) angeschlossen ist und auf den Signalgenerator (308) anspricht, um ausgewählte Bereiche des Phasendifferenzsignales auszutasten; und

eine Rückführschaltung (46, 312), die elektrisch mit der Torschaltvorrichtung (304) zusammengeschaltet ist, um den nichtausgetasteten Bereich des Phasendifferenzsignales zu erfassen, diesen mit einem Bezugssignal zu vergleichen, und ein Rückführ-Fehlersignal zu erzeugen, das den Fehler-Korrektor-Modulator (130) derart regelt, daß die Amplitude des resultierenden Modulationssignales justiert wird, um die Amplitude des Rückführ-Fehler-Signales zu verringern.

10. Faseroptisches Gerät zum Erfassen und Messen einer Rotation nach Anspruch 8, wobei die elektronische Schaltung (504, 506, 508) umfaßt:

einen Frequenzmultiplikator (504), der mit dem Signal-Generator (308) elektrisch zusammengekoppelt ist, um ein zweites Modulationssignal zu erzeugen, das eine Harmonische des ersten Modulationssignales ist;

eine Amplituden-Justier-Schaltung (506) zum Justieren der Amplitude der Harmonischen entsprechend der Amplitude des ersten Modulationssignales;

einen Phasenschieber (508) zum Verschieben der Phase der Harmonischen in Bezug auf das erste Modulationssignal, so daß wenigstens ein Teil der Summe der Schwingungen des ersten und des zweiten Modulationssignales eine rampenförmige Schwingung definieren; und

eine elektrische Verbindung zwischen dem Signalgenerator (308) und dem Phasenschieber (508) zum Kombinieren des ersten und des zweiten Modulationssignales zum Bilden eines resultierenden Modulationssignales.

11. Verfahren zum Bestimmen der Rotation unter Verwendung einer optischen Schleife, in welcher sich in Gegenrichtung ausbreitende Lichtquellen fortpflanzen, die bei einer ersten Frequenz ($f_b$) phasenmoduliert und derart kombiniert sind, daß sie ein Ausgangssignal bilden, gekennzeichnet durch die folgenden Verfahrensschritte:

Austasten wenigstens einer Komponente des Ausgangssignales während bestimmter Male, um ein Torsignal zu erzeugen;

Vor-Einstellen der Phase der sich in Gegenrichtung ausbreitenden Lichtquellen bei einer zweiten, im wesentlichen festen Frequenz ($f_m$), um eine im Torsignal enthaltene Komponente im wesentlichen zu kompensieren, die durch die Rotation erzeugt wurde; und

Messen des Maßes der Vor-Einstellung zum Bestimmen der Rotation.

12. Verfahren zum Bestimmen der Rotation gemäß Anspruch 11, wobei der Schritt des Vor-Einstellens der Phase der sich in Gegenrichtung ausbreitende Lichtwellen die folgenden Schritte umfaßt:

Phasenmodulieren der sich in Gegenrichtung ausbreitenden Lichtwellen bei der zweiten, im wesentlichen festen Frequenz ($f_m$);

Bereitstellen eines Rückführsignales in Abhängigkeit vom Ausgangssignal, wobei das Rückführsignal ein Maß für den Umfang der Phasenverschiebung enthält, die durch die Rotation in der Phasendifferenz der sich in Gegenrichtung ausbreitenden Lichtwellen erzeugt wurde, soweit nicht durch die Phasenmodulation kompensiert; und

Justieren der Amplitude der Phasenmodulation bei einer zweiten Frequenz ($f_m$) in Abhängigkeit des Rückführsignales.

13. Verfahren zum Bestimmen der Rotation gemäß Anspruch 11, wobei der Schritt des Messens der Menge der Voreinstellung den Schritt des Überwachens der Amplitude der Phasenmodulation bei der zweiten Frequenz ($f_m$) beinhaltet.

14. Verfahren zum Bestimmen der Rotation gemäß Anspruch 11, wobei der Schritt des Voreinstellens den Schritt des Aufbringens einer rampenförmigen Phasenmodulation auf die sich in Gegenrichtung ausbreitenden Lichtquellen während wenigstens eines Teiles einer Periode beinhaltet, ent sprechend der zweiten Frequenz ($f_m$), so daß auf die Phasendifferenz der sich in Gegenrichtung ausbreitenden Lichtwellen eine im wesentlichen gleichstromförmige Phasen-Voreinstellung aufgebracht wird, und eine Komponente im Torsignal im wesentlichen kompensiert wird, die durch die Rotation erzeugt wurde.

10

24

12

32

12E

12A

12B

26

12C

12D

34

A B
C D

A B
C D

$W_1$

$W_2$

30

NC    NC

12G

12F

49

48

44

47

46

DISPLAY

LOCK-IN AMPLIFIER

AC G

Fig. 1

Fig. 2

Fig. 3

Fig. 4

**Fig. 5**

**Fig. 6**

Fig. 7

Fig. 8

Fig. 9

Fig. 10

Fig. 11

37

Fig. 13

Fig. 12

Fig. 14

ERROR CORRECTION MODULATOR

INTEGRATOR

$i_{IN}$

168

$i_{IN}$

$i_{IN}$

FEED-
BACK
ERROR

$i_{IN}$

170

OP
AMP

169

$V_O$

$R_O$

172

318

190

174

320

BALANCED
MODULATOR

188

322

TO
PHASE
MODULATOR

130

*Fig. 15*

FEEDBACK
ERROR
SIGNAL

176

177

178

180

182

184

186

$t$ (A)

INTEGRATOR
OUTPUT
$V_O$

177B

178B

180B

176B

182B

184B

186B

$t$ (B)

*Fig. 16*

Fig. 17

Fig. 18

Fig. 19

OUTPUT DISPLAY

*322*

2ND.
MODULATION
DRIVING
SIGNAL

R.M.S.
VOLTMETER — IN

$R_1$

$R_2$

208

*Fig. 21*

---

OUTPUT DISPLAY

*332*

*Fig. 22*

OSCILLOSCOPE — IN

$R_3$

$R_4$

208

---

OUTPUT DISPLAY

INPUT

2ND
MODULATION
DRIVING
SIGNAL

LOCK - IN
AMP — 210

*332*

REF.

FROM
SIGNAL
GEN. 308

*320*

212 — OUTPUT

A/D — 214

217

DATA IN

ROM XFER
FUNCTION
LOOK - UP
TABLE — ADR — MICRO-
PROCESSOR — 216

218

DATA OUT

D/A — 220

*Fig. 20*

Fig. 23

PHASE MODULATOR $\phi(t)$

$\phi(t)$

C.C.W.

402

C.W.

400

$\phi_{ccw}(t) - \phi_{cw}(t) = \Delta\phi(t)$

$\Delta\phi$

$\tau$

$\Delta\phi$

404

$t$

$t$

$\phi(t)$

$\phi(t)$    $\phi(t-\tau)$

$\phi_0$

406   408   408

$T$

$\tau$

Fig. 24a

$\Delta\phi(t)$

412   412   412   412

410   410

Fig. 24b   0

$t$

Fig. 24

Fig. 25a

Fig. 25b

Fig. 25c

Fig. 25d

Fig. 26

Fig. 27

Fig. 28

Fig. 29